# EUROPÄISCHE PATENTSCHRIFT

(11) **EP 3 317 953 B1**
(45) Veröffentlichungstag und Bekanntmachung des Hinweises auf die Patenterteilung: **05.08.2020**
(21) Anmeldenummer: 16733922.5
(22) Anmeldetag: 27.06.2016
(51) Int. Cl.: H02K 1/18, H02K 1/30, H02K 7/18, H02K 15/02

(54) **TRÄGERELEMENT, INSBESONDERE STATORTRÄGER-ELEMENT UND/ODER LÄUFERTRÄGER-ELEMENT, SYSTEM VON TRÄGERELEMENTEN, GENERATORTRÄGER, GENERATOR, GENERATOR-TRAGSYSTEM, GONDEL EINER WINDENERGIEANLAGE, WINDENERGIEANLAGE UND VERFAHREN ZUR MONTAGE EINES GENERATOR-TRAGSYSTEMS**
CARRIER ELEMENT, ESPECIALLY STATOR CARIER ELEMENT AND/OR ROTOR CARRIER ELEMENT, SYSTEM OF CARRIER ELEMENTS, GENERATOR CARRIER, GENERATOR, GENERATOR CARRIER SYSTEM, NACELLE OF A WIND TURBINE, WIND TURBINE AND METHOD FOR MOUNTING A GENERATOR CARRIER SYSTEM
ÉLÉMENT DE SUPPORT, EN PARTICULIER ÉLÉMENT DE SUPPORT D'UN STATOR ET/OU D'UN ROTOR, SYSTEM DES ÉLÉMENTS DE SUPPORT, SUPPORT DE GÉNÉRATEUR, GÉNÉRATEUR, SYSTÈME DE SUPPORT DE GÉNÉRATEUR, NACELLE D'UNE ÉOLIENNE, ÉOLIENNE ET PROCÉDÉ DE MONTAGE D'UN SYSTÈME DE SUPPORT DE GÉNÉRATEUR

(30) Priorität: 02.07.2015 DE 102015212452
(43) Veröffentlichungstag der Anmeldung: 09.05.2018
(73) Patentinhaber: Wobben Properties GmbH, 26607 Aurich (DE)
(72) Erfinder: SARTORIUS, Florian, 26789 Leer (DE)
(74) Vertreter: Eisenführ Speiser
(86) Internationale Anmeldenummer: PCT/EP2016/064881
(87) Internationale Veröffentlichungsnummer: WO 2017/001349

(56) Entgegenhaltungen:
- EP-A1- 2 621 056
- EP-A1- 2 685 602
- WO-A1-97/14207
- US-A1- 2011 266 909

## Beschreibung

Die Erfindung betrifft ein Trägerelement für einen Träger eines Ring-Generators, insbesondere ein Statorträger-Element für einen Statorträger eines Ring-Generators und/oder ein Läuferträger-Element für einen Läuferträger eines Ring-Generators, wobei zur Bildung des jeweiligen Trägers eine Anzahl von Trägerelementen über eine Generatorfläche zusammengesetzt werden und welcher Träger mit einem außen-umfänglichen Tragring zur Anbringung einer Wicklung und mit einem innen-umfänglichen Tragansatz, insbesondere zur Vermittlung zu einem Zapfen zur Verbindung mit einem Maschinenträger, ausgebildet ist.

Die Erfindung betrifft weiter ein System eines mehrelementigen Trägers mit einer Anzahl von Trägerelementen, insbesondere einen mehrelementigen Statorträger und/oder einen mehrelementigen Läuferträger. Die Erfindung betrifft weiter einen entsprechenden Generatorträger.

Die Erfindung betrifft weiter einen Generator, ein Generator-Tragsystem sowie eine Gondel und eine Windenergieanlage und ein Verfahren zur Montage eines Generator-Tragsystems.

Eine Windenergieanlage, insbesondere eine Horizontalachsen-Windenergieanlage, hat sich, insbesondere als getriebelose Windenergieanlage, bewährt. In solch einem Fall einer getriebelosen Windenergieanlage --die hier eingangs beispielhaft erläutert ist, was jedoch grundsätzlich als nicht einschränkend für die Erfindung gemeint ist-- treibt ein aerodynamischer Rotor den Läufer eines Generators unmittelbar an, sodass durch Wechselwirkung der elektromagnetischen Felder im Generator zwischen Läufer und Stator die aus dem Wind gewonnene Bewegungsenergie in elektrische Energie umgewandelt wird.

Der Läufer des Generators dreht sich im Falle einer getriebelosen Windenergieanlage mit der Geschwindigkeit des aerodynamischen Rotors und damit mit vergleichsweise langsamer Drehzahl, weshalb ein solcher Generator auch als Langsamläufer bezeichnet wird. Aufgrund einer vergleichsweise hohen Polzahl der Wicklung wird bei bestehender Speisefrequenz die Nenndrehzahl also deutlich gesenkt. Entsprechend weist ein Langsamläufer der vorgenannten Art mit hoher Polzahl einen entsprechend großen Durchmesser auf, der mehrere Meter betragen kann, was grundsätzlich vorteilhaft ist. Problematisch dabei ist jedoch, dass ein für eine getriebelose Windenergieanlage vorgesehener Langsamläufer als Generator --der insofern vorzugsweise als ein Synchrongenerator gebildet isteinen Durchmesser haben kann, welcher übliche Transportbreiten auf einer Straße deutlich übersteigt. So kann beispielsweise ein typischer am Luftspalt zwischen Läufer und Stator gemessener Luftspaltdurchmesser zehn Meter oder zwanzig Meter oder mehr betragen während eine maximale Straßenbreite für einen Transport beispielsweise nur etwa fünf Meter betragen kann.

Es ist grundsätzlich bekannt, wie beispielsweise in DE 10 2012 208 547 A1 beschrieben, einen Außenläufer eines Synchrongenerators einer getriebelosen Windenergieanlage mehrteilig auszubilden, wobei der Stator ungeteilt sein soll.

Aus DE 101 28 438 A1 und DE 100 33 233 A1 sind verschiedene Statorträger für einen Stator eines Generators einer Windenergieanlage bekannt. Solche Statorträger eignen sich jedoch nicht für eine zum Transport gewollte Teilung des Generators. Vielmehr setzen diese zwingend voraus, dass der Generator auf den dort beschriebenen Träger werkseitig fertiggestellt wird und ungeteilt transportiert wird. So weist der in DE 100 33 233 A1 beschriebene Ring-Generator einen Stator und einen Läufer auf, wobei der Stator eine Tragkonstruktion aufweist, mittels der der Statorring und die Stator-Wicklung gehalten werden. Die Tragkonstruktion ist aus mehreren Tragarmen gebildet, die aus einer Stabkonstruktion bestehen.

Aus DE 100 40 273 A1 ist grundsätzlich bekannt, eine Generatoranordnung mit wenigstens zwei Statoren mit jeweils wenigstens einer Stator-Wicklung vorzusehen, wobei jedem Stator wenigstens ein elektrischer Strang --bevorzugt bestehend aus einem Gleichrichter, einem Wechselrichter und einem Transformator-- zugeordnet ist. Beispielsweise können vier Statoren vorgesehen sein, wobei jeder einzelne Stator unter Beibehaltung der anderen Statoren ausgewechselt werden kann.

Auch EP 2 685 602 A1 beschreibt eine Generatoranordnung mit einem Stator, der in Statorsegmente unterteilt ist, wobei sich jedes der Statorsegmente axial von einem Ende zum anderen Ende des Stators erstreckt und jedes der Statorsegmente elektrisch voneinander getrennt ist.

Aus US 2011/266909 A1 ist bekannt, ein Trägerelement für einen Träger eines Ring-Generators, wobei zur Bildung des Trägers eine Anzahl von Trägerelementen über eine Generatoroberfläche zusammengesetzt werden und welcher Träger mit einem außenumfänglichen Tragring zur Anbindung einer Wicklung und mit einem innenumfänglichen Tragansatz ausgebildet ist. Das Tragelement weist auf, einen kreisausschnittförmigen Schenkel, der einem Flächensektor der Generatoroberfläche zugeordnet und zum Zusammensetzen des Tragrings ausgebildet ist, wobei der Schenkel mit dem innen-teilumfänglich verlaufenden Tragansatz, zur Anbringung an einem vollumfänglichen Tragflansch vorgesehen ist, wobei der vollumfängliche Tragflansch zur Vermittlung zu einem Zapfen zur Verbindung mit einem Maschinenträger vorgesehen ist, und wobei ein Läufer-Schenkel in Form eines den Flächensektor überdeckenden Teils als Speichen-Teil gebildet ist.

WO 97/14207 A1 beschreibt einen Rotor mit einer einstückig ausgebildeten Scheibe, die auf einer Rotorwelle angeordnet ist. Der die Pole tragende Jochring besteht aus einzeln geschichteten Blechen. Diese segmentierten Bleche werden überlappend geschichtet und beidseitig auf der Scheibe vorgesehen. Diese geschichteten Bleche werden mit einem Spannbolzen, der auch durch die Scheibe geführt ist, zusammengespannt. Die Scheibe reicht bis zum Außenrand der geschichteten Bleche und bildet mit diesen den Jochring. Die Scheibe weist Ausnehmungen auf. Die Form dieser Ausnehmungen wird so gewählt, dass in Drehrichtung gesehen, von innen nach außen voreilende Stege gebildet werden.

Das Deutsche Patent- und Markenamt hat in der Prioritätsanmeldung zur vorliegenden PCT-Anmeldung das folgende Dokument recherchiert: DE 10 2008 050 848 A1.

Problematisch bei allen in den vorgenannten Dokumenten beschriebenen Ansätzen ist jedoch weiterhin, dass die darin beschriebenen konstruktiven (hinsichtlich der Träger) oder funktionellen (hinsichtlich des elektrischen Strangs) Teilungen eines Generators konstruktiv noch zu verbessern sind.

An dieser Stelle setzt die Erfindung an, deren Aufgabe es ist, wenigstens eines der oben genannten Probleme zu adressieren. Insbesondere ist es Aufgabe der Erfindung, ein Trägerelement, einen Träger, insbesondere ein Statorträger-Element für einen Statorträger eines Ring-Generators und/oder ein Läuferträger-Element für einen Läuferträger eines Ring-Generators, ein System eines mehrelementigen Trägers, einen GeneratorTräger, ein Generator-Tragsystem, und einen Generator anzugeben, mittels dem die vorgenannte Transportproblematik in verbesserter Weise gelöst werden kann. Bevorzugt zusätzlich oder ggfs. alternativ dazu soll in verbesserter Weise die Konstruktion bzw. der Aufbau bzw. die Montage des Trägers vornehmbar sein.

Insbesondere ist es Aufgabe der Erfindung, einen Generator und ein diesem zugrunde liegendes Trägerelement und Träger anzugeben. Vorzugsweise ist der Generator als Synchrongenerator und Langsamläufer mit einem vergleichsweise großen Durchmesser, insbesondere einem Durchmesser eines Luftspalts von zehn Meter und mehr, ausgebildet. Es ist insbesondere eine Aufgabe, diesen dennoch in vergleichsweise verbesserter Weise teilbar transportierbar und/oder zusammensetzbar zu gestalten.

Insbesondere soll eine Gondel einer Windenergieanlage vorteilhaft assemblierbar sein. Insbesondere ist es Aufgabe der Erfindung, eine entsprechende Gondel und eine Windenergieanlage anzugeben, die von dem Trägerelement profitieren. Insbesondere soll ein verbessertes Verfahren zur Montage eines Generator-Tragsystems, insbesondere zusammen mit dem Rotor, angegeben werden, wobei ein Transport eines Trägerelements und/oder die Montage des Generator-Tragsystems vergleichsweise vereinfacht erfolgen soll. Insbesondere ist es Aufgabe der Erfindung, das Zusammensetzen und die Montage der Trägerelemente an einem Aufbauort einer Windenergieanlage und/oder das Assemblieren eines Tragsystems in der Gondel der Windenergieanlage vergleichsweise vereinfacht zu gestalten, jedenfalls zur Verbesserung gegenüber dem Stand der Technik.

Die Aufgabe betreffend ein Trägerelement wird gelöst gemäß der Erfindung durch ein Trägerelement des Anspruchs 1, insbesondere ein Statorträger-Element des Anspruchs 3 und/oder --d.h. zusätzlich oder alternativ-- ein Läuferträger-Element des Anspruchs 7.

Für das Trägerelement für einen Träger eines Ring-Generators (insbesondere für ein Statorträger-Element für einen Statorträger eines Ring-Generators und/oder für ein Läuferträger-Element für einen Läuferträger eines Ring-Generators) ist vorgesehen, dass zur Bildung des Trägers eine Anzahl von Trägerelementen über eine Generatorfläche zusammengesetzt werden und welcher Träger mit einem außen-umfänglichen Tragring zur Anbringung einer Wicklung und mit einem innen-umfänglichen Tragansatz, insbesondere zur Vermittlung zu einem Zapfen zur Verbindung mit einem Maschinenträger, ausgebildet ist.

Erfindungsgemäß ist weiter vorgesehen, dass das Trägerelement aufweist:
- einen, vorzugsweise einzigen und/oder kreisausschnittförmigen, Schenkel, der einem ersten Flächensektor der Generatorfläche zugeordnet und zum Zusammensetzen des Tragrings ausgebildet ist, wobei
- der Schenkel mit dem innen-teilumfänglich verlaufenden Tragansatz, insbesondere einstückig, zur Anbringung an einem vollumfänglichen Tragflansch vorgesehen ist, insbesondere wobei der vollumfängliche Tragflansch zur Vermittlung zu einem Zapfen zur Verbindung mit einem Maschinenträger vorgesehen ist, wobei
- der Tragansatz ein erstes Passelement und der Tragflansch ein zweites Passelement aufweist, wobei das erste und zweite Passelement, insbesondere als Female-Teil und Male-Teil, passend aufeinander abgestimmt sind. Vorzugsweise sind diese passgenau aufeinander abgestimmt.

Die Erfindung führt auch auf ein System eines mehrelementigen Trägers mit einer Anzahl von Trägerelementen nach wenigstens einem der Ansprüche 1 bis 2, insbesondere ein mehrelementiger Statorträger mit einer Anzahl von Statorträger-Elementen nach wenigstens einem der Ansprüche 3 bis 6 und/oder ein mehrelementiger Läuferträger mit einer Anzahl von Läuferträger-Elementen nach wenigstens einem der Ansprüche 7 bis 10.

Die Erfindung geht von der Überlegung aus, dass es bei einem Trägerelement zur Bildung des Trägers mit einer Anzahl von Trägerelementen über eine Generatorfläche unter Zusammensetzen derselben, bislang in unzureichender Weise ein außen-umfänglicher Tragring und/oder ein innen-umfänglicher Tragflansch zusätzlich und nachfolgend assembliert werden müssen an einem Schenkel eines Trägerelementes.

Die Erfindung hat erkannt, dass es beim Trägerelement vorteilhaft berücksichtigt werden kann, dass zur Bildung des Trägers eine Anzahl von Trägerelemente über eine Generatorfläche zusammengesetzt werden und der Träger mit einem außen-umfänglichen Tragring zur Anbringung einer Wicklung und/oder mit einem innen-umfänglichen Tragansatz, insbesondere zur Vermittlung zu einem Zapfen zur Verbindung mit einem Maschinenträger, ausgebildet ist. Dementsprechend sieht das Konzept der Erfindung hinsichtlich des Trägerelements in der oben genannten Weise vor:
- einen, vorzugsweise einzigen und kreisausschnitt-förmigen, Schenkel, der einem Flächensektor der Generatorfläche zugeordnet und zum Zusammensetzen des Tragrings ausgebildet ist, wobei
- der Schenkel mit dem innen-teilumfänglich verlaufenden Tragansatz, insbesondere einstückig, zur Anbringung an einem vollumfänglichen Tragflansch vorgesehen ist, insbesondere wobei der vollumfängliche Tragflansch zur Vermittlung zu einem Zapfen zur Verbindung mit einem Maschinenträger vorgesehen ist, wobei
- der Tragansatz ein erstes Passelement und der Tragflansch ein zweites Passelement aufweist, wobei das erste und zweite Passelement, insbesondere als Female-Teil und Male-Teil, passend aufeinander abgestimmt sind. Vorzugsweise sind diese passgenau aufeinander abgestimmt.

Dementsprechend sieht das Konzept der Erfindung hinsichtlich des Statorträger-Elements vor:
- einen, vorzugsweise einzigen und kreisausschnitt-förmigen, Stator-Schenkel, der einem Flächensektor der Generatorfläche zugeordnet und zum Zusammensetzen des Stator-Tragrings ausgebildet ist, wobei
- der Stator-Schenkel mit dem innen-teilumfänglich verlaufenden Stator-Tragansatz, insbesondere einstückig, zur Anbringung an einem vollumfänglichen Tragflansch vorgesehen ist, wobei der vollumfängliche Tragflansch als Aufnahmeflansch zur Anbringung an dem Aufnahmezapfen zur Verbindung mit einem Maschinenträger vorgesehen ist, wobei der Stator-Tragansatz ein erstes Passelement und der Aufnahmeflansch ein zweites Passelement aufweist, wobei das erste und zweite Passelement, insbesondere als Female-Teil und Male-Teil, passend aufeinander abgestimmt sind. Vorzugsweise sind diese passgenau aufeinander abgestimmt.

Insbesondere ist vorgesehen, dass der Stator-Schenkel mit dem innen-teilumfänglich verlaufenden Tragansatz einstückig zur Anbringung an einem vollumfänglichen Aufnahmeflansch vorgesehen ist.

Entsprechend sieht das Konzept der Erfindung betreffend das Läuferträger-Element vor:
- einen, vorzugsweise einzigen und kreisausschnitt-förmigen, Läufer-Schenkel, der einem Flächensektor der Generatorfläche zugeordnet und zum Zusammensetzen des Läufer-Tragrings ausgebildet ist, wobei
- der Läufer-Schenkel mit dem innen-teilumfänglich verlaufenden Läufer-Tragansatz, insbesondere einstückig, zur Anbringung an einem vollumfänglichen Tragflansch vorgesehen ist, wobei der vollumfängliche Tragflansch als Nabenflansch zur Anbringung an einer Nabe vorgesehen ist, wobei die Nabe auf einem Achszapfen zur Verbindung mit einem Aufnahmezapfen und dieser mit einem Maschinenträger vorgesehen ist, wobei
- der Läufer-Tragansatz ein erstes Passelement und der Nabenflansch ein zweites Passelement aufweist, wobei das erste und zweite Passelement, insbesondere als Female-Teil und Male-Teil, passend aufeinander abgestimmt sind. Vorzugsweise sind diese passgenau aufeinander abgestimmt.

Insbesondere ist vorgesehen, dass der Läufer-Schenkel mit dem innen-teilumfänglich verlaufenden Tragansatz einstückig zur Anbringung an einem vollumfänglichen Nabenflansch vorgesehen ist.

Die Erfindung führt auch auf einen Generatorträger des Anspruchs 12 und einen Generator des Anspruchs 13 mit einem solchen Generatorträger bzw. Träger, insbesondere mit einem Statorträger und/oder einem Läuferträger.

Das Konzept der Erfindung führt auch auf ein Generator-Tragsystem des Anspruchs 14 mit einem solchen Generator, aufweisend:
- einen Aufnahmezapfen zum Tragen des Stators, optional zur Anbringung an oder weiter auch aufweisend einen Maschinenträger, wobei der Statorträger mit dem innen-teilumfängliche Stator-Tragansatz zur lösbar festen Verbindung mit dem Aufnahmeflansch am Aufnahmezapfen angebracht ist, und/oder
- einen Achszapfen zur Anbringung einer Rotornabe, wobei der Läuferträger mit dem innen-teilumfänglich verlaufenden Läufer-Tragansatz zur Anbringung an dem Nabenflansch an der Rotornabe vorgesehen ist,
- optional auch der Rotor mit Rotornabe und Rotorblättern, wobei die Rotornabe auf einem Achszapfen zur Verbindung mit einem Aufnahmezapfen und dieser optional mit einem Maschinenträger vorgesehen ist.

Das Konzept der Erfindung führt auch auf eine Gondel des Anspruchs 15 für eine Windenergieanlage. Die Gondel hat erfindungsgemäß eine hintere Gondelverkleidung und mit einem Generator-Tragsystem gemäß dem Konzept der Erfindung sowie einen Rotor, umfassend die Rotornabe, unter Fortsetzung der hinteren Gondelverkleidung.

Das Konzept der Erfindung führt auch auf eine Windenergieanlage des Anspruchs 16, die insbesondere als eine getriebelose Windenergieanlage ausgebildet ist. Erfindungsgemäß weist die Windenergieanlage auf:
- einen Turm mit einem Kopfflansch, und
- eine Gondel mit einem Generator-Tragsystem nach Anspruch 14, wobei der Maschinenträger am Kopfflansch angeschlossen ist und wobei die Gondel eine hintere Gondelverkleidung aufweist, sowie
- mit einem Rotor umfassend eine Rotornabe unter Fortsetzung der hinteren Gondelverkleidung.

Das Konzept der Erfindung führt auch auf ein Verfahren zur Montage eines Generator-Tragsystems nach Anspruch 17, bei dem
- der Statorträger mit dem Stator-Tragansatz und dem Aufnahmeflansch am Aufnahmezapfen angebracht wird,
- die Rotornabe auf dem Achszapfen vormontiert wird zur Bildung einer Nabenlagerung, insbesondere ab Werk, und der Achszapfen die Rotornabe lagernd aufnimmt
- der Läuferträger mit dem Läufer-Tragansatz und dem Nabenflansch an der Rotornabe angebracht wird. und
- die Nabenlagerung mit dem Achszapfen an den Aufnahmezapfen des Maschinenträgers gesetzt wird, und
- die Anzahl von Rotorblättern zur Bildung des Rotors an die Anzahl von Blattflanschlagern der Rotornabe angesetzt werden, und
- die so zusammengesetzten Teile am Maschinenträger, insbesondere bei einem errichteten Turm mit einem Kopfflansch, angebracht werden.

Die Erfindung hat den Vorteil, dass mittels den erfindungsgemäß ausgestalteten Trägerelementen der Tragring beim Zusammensetzen des Trägers gleich mit zusammengesetzt wird, wobei eine Montage des Trägers an einem Generator-Tragsystem vergleichsweise einfach ermöglicht ist, insbesondere indem ein vollumfänglich verlaufender Tragflansch vorgesehen ist, an den ein Schenkel mit dem innen-teilumfänglich verlaufenden Tragansatz, insbesondere einstückig, anschließt.

Insbesondere ist vorgesehen, dass mittels den erfindungsgemäß ausgestalteten Statorträger-Elementen zum Zusammensetzen des Statorträgers und/oder erfindungsgemäß ausgestalteten Läuferträger-Elementen zum Zusammensetzen des Läuferträgers der Stator-Tragring beziehungsweise Läufertragring gleich mit zusammengesetzt wird, wobei eine Assemblierung des Statorträgers beziehungsweise Läuferträgers an einem Generator-Tragsystem vergleichsweise einfach ermöglicht ist, indem ein innen-vollumfänglich verlaufender Aufnahmeflansch, beziehungsweise ein innen-vollumfänglich verlaufender Nabenflansch, vorgesehen ist, an den der, vorzugsweise einzige und kreisausschnittförmige, Schenkel, vorzugsweise einstückig, mittels innen-teilumfänglich verlaufenden Tragansatz anschließen. D.h. der vorzugsweise einstückige Stator-Schenkel, der zum Zusammensetzen des Stator-Tragflansches ausgebildet ist, schließt an einem innen-vollumfänglich verlaufenden Aufnahmeflansch an bzw. der vorzugsweise einstückige Läufer-Schenkel, der zum Zusammensetzen des Läufer-Tragflansches ausgebildet ist, schließt an einem innen-vollumfänglich verlaufenden Nabenflansch an.

Beim Zusammensetzen der Trägerelemente ist ein zusätzlicher Arbeitsschritt vermieden, derart, dass beim Zusammensetzen der Trägerelemente wenigstens ein entsprechender außen-umfänglicher Tragring des Trägers mit zusammengesetzt wird. Des Weiteren ist mittels eines innen-vollumfänglich verlaufenden Tragflansches, d.h. des Aufnahmeflansches bzw. des Nabenflansches, eine besonders sichere Vorgabe geschaffen, die innen-teilumfänglichen Tragansätze zum Zusammensetzen am innen-umfänglichen Tragflansches auszurichten, insbesondere zu zentrieren, und einem Zapfen des Generator-Tragsystems zuzuordnen.

Erfindungsgemäß ist dazu weiter vorgesehen, dass der Tragansatz ein erstes Passelement und der Tragflansch ein zweites Passelement aufweist, wobei das erste und zweite Passelement, insbesondere als Female-Teil und Male-Teil, passend aufeinander abgestimmt sind.

Hinsichtlich des Statorträger-Elements ist vorgesehen, dass der Stator-Tragansatz ein erstes Passelement und der Aufnahmeflansch ein zweites Passelement aufweist, wobei das erste und zweite Passelement, insbesondere als Female-Teil und Male-Teil, passend aufeinander abgestimmt sind. Vorzugsweise sind diese passgenau aufeinander abgestimmt.

Hinsichtlich des Läuferträger-Elements ist vorgesehen, dass der Läufer-Tragansatz ein erstes Passelement und der Nabenflansch ein zweites Passelement aufweist, wobei das erste und zweite Passelement, insbesondere als Female-Teil und Male-Teil, passend aufeinander abgestimmt sind. Vorzugsweise sind diese passgenau aufeinander abgestimmt.

Die Trägerelemente gemäß dem Konzept der Erfindung bieten den Vorteil, dass diese bereits wetterfest ausgebildet werden können. Dies betrifft insbesondere die Anbringung einer Stator-Wicklung am Stator-Tragring-Segment des Statorträger-Elements beziehungsweise die Anbringung einer Läuferwicklung am Läufer-Tragring-Segment des Läuferträger-Elements. Dies ermöglicht es, einen Generator vorzusehen --als sogenannten Freiluftgenerator--, der bei einer Gondel zwischen einer Rotornabe und einer hinteren Gondelverkleidung über den so vorgegebenen Verlauf der Gondelverkleidung hinaus, also aus der Gondel herausragt.

Gemäß dem vorgeschlagenen Verfahren zur Montage eines Generator-Tragsystems des Anspruchs 17, bietet die Erfindung eine vergleichsweise sichere und einfache Montagemöglichkeit.

Vorzugsweise können dazu ein Statorträger und/oder ein Läuferträger eines Systems zur Montage temporär verbunden werden zur Bildung eines Generatorträgers, und
- der Generatorträger, insbesondere als Teil eines Generators, mit temporär verbundenem Statorträger und Läuferträger an einen Aufnahmezapfen des Maschinenträgers angebracht wird, wobei
- der Statorträger mit dem Stator-Tragansatz und dem Aufnahmeflansch am Aufnahmezapfen angebracht wird, und/oder wobei
- der Läuferträger, mit dem Läufer-Tragansatz und dem Nabenflansch an der Rotornabe angebracht wird und ein Achszapfen die Rotornabe lagernd aufnimmt.

Insbesondere können Läuferträger-Element für einen Läuferträger eines Ring-Generators seitlich entlang eines Radius, d.h. senkrecht zu einer Zentrierachse eingebracht werden.

Insgesamt bietet das Konzept der Erfindung die Möglichkeit, ein Trägerelement --d.h. insbesondere ein Statorträger-Element beziehungsweise Läuferträger-Element-- entlang eines Verlaufs eines Flächensektors des kreisausschnitt-förmigen Schenkels auf einem Transportfahrtzeug anzuordnen, insbesondere länglich anzuordnen entlang des Verlaufs eines Flächensektors des kreisausschnitt-förmigen Schenkels. Dabei kann in dem Fall gleichwohl das Trägerelement entsprechend der Länge des Flächensektors für einen Synchrongenerator als Langsamläufer mit vergleichsweise großem Durchmesser vorgesehen sein. Kurz gesagt, kann ein Trägerelement, insbesondere ein Statorträger-Element oder ein Läuferträger-Element, durchaus eine Länge von zehn Meter, zwanzig Meter oder mehr aufweisen entlang des Flächensektors. So kann selbst bei vergleichsweise engen Straßenverläufen, z.B. von fünf Metern oder weniger, ein Trägerelement separat von anderen Trägerelementen transportiert werden; d.h. eine mehrteiliger Träger kann in seine Trägerlemente zerlegt transportiert werden. Dennoch kann vergleichsweise einfach eine Montage der Anzahl von Trägerelementen zu einem Träger erfolgen. Insbesondere kann eine Anzahl von Statorträger-Elementen zu einem Statorträger beziehungsweise eine Anzahl von Läuferträger-Elementen zu einem Läuferträger vergleichsweise einfach zusammengesetzt werden. Der innen-umfängliche Tragflansch --also der Aufnahmeflansch für die Mehrzahl von Statorträger-Elementen und der Nabenflansch für die Mehrzahl von Läuferträger-Elemente-- ist vorzugsweise einstückig vorhanden und der außen-umfängliche Tragflansch des Trägers wird beim Zusammensetzen der Trägerelemente gleich mit gebildet.

Vorteilhafte Weiterbildungen der Erfindung sind den Unteransprüchen zu entnehmen und geben im Einzelnen vorteilhafte Möglichkeiten an, das oben erläuterte Konzept im Rahmen der Aufgabenstellung sowie hinsichtlich weiterer Vorteile zu realisieren.

Der Einfachheit halber wird im Folgenden teilweise auf ein Trägerelement Bezug genommen, wobei dazu ein Statorträger-Element oder ein Läuferträger-Element oder ein Statorträger-Element und ein Läuferträger-Element zu verstehen ist. Ebenso wird zum Teil Bezug genommen auf einen Träger, wobei dazu ein Statorträger oder ein Läuferträger oder ein Statorträger und ein Läuferträger zu verstehen ist. Ähnlich wird im Folgenden der Einfachheit halber teilweise auf einen Tragring für einen Stator-Tragring und/oder Läufer-Tragring beziehungsweise auf einen Tragflansch für einen Stator-Tragflansch und/oder Läufer-Tragflansch Bezug genommen. Ähnlich wird für einen Stator beziehungsweise Läufer im Folgenden teilweise Bezug genommen unter allgemeiner Benennung eines Schenkels, Tragarms, Tragrings oder Tragring-Segments oder Sitzflansches.

Im Rahmen einer Weiterbildung hat es sich als vorteilhaft erwiesen, dass der Schenkel einen radial verlaufenden Tragarm und ein am Tragarm anschließendes außenumfänglich verlaufendes Tragring-Segment zur Bildung des Tragrings aufweist.

Vorteilhaft kann unter gegenseitig verdrehter Anordnung unterschiedlicher Trägerelemente und damit unter umfänglichem Versatz unterschiedlicher Tragring-Segmente der Tragring zu bilden sein.

Insbesondere hat es sich als vorteilhaft erwiesen, dass zusätzlich oder alternativ ein Tragring-Segment an einem oder mehreren Tragarmen des Schenkels anschließt, insbesondere einstückig anschließt. Beispielsweise kann ein Schenkel ein, zwei, drei oder mehr Tragarme --ähnlich einer Anordnung von Speichen-- aufweisen, an die ein Tragringsegement in geeigneter Weise angeschlossen ist, insbesondere einstückig angeschlossen ist. Grundsätzlich kann ein Schenkel ein, zwei oder mehr Tragarme aufweisen.

Erfindungsgemäß ist ein Tragarm und/oder Schenkel in Form eines den Flächensektor überdeckenden Flachteils gebildet. Das Flachteil kann beispielsweise als ein Speichenteil gebildet sein, das einen ersten, zweiten Tragarm oder mehr Tragarme aufweist; beispielsweise drei, vier oder fünf Tragarme.

Der vom Tragring-Segment überstrichene Winkelausschnitt des außen-umfänglichen Vollwinkels des Tragrings ist vorzugsweise davon abhängig, wie hoch die Anzahl von Trägerelementen ist, zur Bildung des Trägers. Wenn beispielsweise, wie bevorzugt, drei Trägerelemente --insbesondere Statorträger-Elemente zur Bildung eines Statorträgers beziehungsweise Läuferträger-Elemente zur Bildung eines Läuferträgers-- vorgesehen sind, hat es sich als vorteilhaft erwiesen, dass ein Schenkel jeweils wenigstens drei, vier, fünf oder sechs Tragarme aufweisen, an denen zusammen ein Tragring-Segment außenumfänglich, vorzugsweise einstückig, anschließt. Wenn beispielsweise, wie auch bevorzugt, drei Trägerelemente --insbesondere Statorträger-Elemente zur Bildung eines Statorträgers beziehungsweise Läuferträger-Elemente zur Bildung eines Läuferträgersvorgesehen sind, hat es sich als vorteilhaft erwiesen, dass jeder Schenkel die, vier oder fünf Tragarme vorsieht, an denen ein entsprechendes Tragring-Segment, vorzugsweise einstückig, angeschlossen ist.

Insbesondere hat es sich als vorteilhaft erwiesen, dass zusätzlich oder alternativ unter verdrehter Anordnung unterschiedlicher Trägerelemente --insbesondere Statorträger-Elemente beziehungsweise Läuferträger-Elemente-- und damit unter umfänglichem Versatz unterschiedlicher Tragring-Segmente Tragring zu bilden ist. Ist beispielsweise eine Anzahl von drei Trägerelementen zur Bildung eines Trägers mit jeweils einem Schenkel vorgesehen, überstreicht vorteilhaft jeder Schenkel einen Flächensektor der Generatorfläche, der einem umfänglichen Winkel von 120° entspricht. Sind dagegen vier Trägerelemente vorgesehen, überstreicht vorteilhaft jeder Schenkel einen Flächensektor der Generatorfläche, der einem umfänglichen Winkel von 90° entspricht.

Ein Tragring-Segment kann, muss aber nicht, mit einem seitlich dazu benachbarten Tragring-Segment eines anderen Trägerelements stützend und fest verbunden werden beim Zusammensetzen der Trägerelemente. Insbesondere im Fall eines einstückigen Anschließens eines Tragring-Segments an einen Tragarm, erweist sich ein Trägerelement jedoch als ausreichend stabil, sodass auch ein Spalt zwischen den benachbarten Tragring-Segmenten verbleiben kann nach dem Zusammensetzen der Trägerelemente.

Hinsichtlich der justierend wirkenden Passelemente ist erfindungsgemäß vorgesehen, dass
- das erste Passelement als eine innen-teilumfängliche Nut oder dergleichen Female-Teil am innen-teilumfänglichen Tragansatz ausgebildet ist und das zweite Passelement als ein vollumfänglicher Steg oder dergleichen Male-Teil am vollumfänglichen Tragflansch ausgebildet ist; oder (umgekehrt)
- das erste Passelement als ein innen-teilumfänglicher Steg oder dergleichen Male-Teil am innen-teilumfänglichen Tragansatz ausgebildet ist und das zweite Passelement als eine vollumfängliche Nut oder dergleichen Female-Teil am vollumfänglichen Tragflansch ausgebildet ist.

Jedes der Passelemente, insbesondere eine umfängliche Nut oder dergleichen Female-Teil und/oder ein umfänglicher Steg oder dergleichen Male-Teil, kann mit dem Tragansatz und/oder Tragflansch als Drehteil in einer drehenden Bearbeitung als Arbeitsschritt während der Herstellung mit vergleichsweise geringem Aufwand am Tragansatz und/oder Tragflansch gefertigt werden. Die Vorteile einer einfachen passgenauen Montage von Tragansatz und Tragflansch an der Baustelle sind dagegen erheblich.

Erfindungsgemäß weist das erste Passelement und/oder das zweite Passelement eine Stirnfläche und eine Seitenfläche auf, wobei die Stirnfläche zur Seitenfläche schräg verläuft. Insbesondere kann vorgesehen sein, dass
- die Stirnfläche parallel zur Anschluss-Ebene des Tragansatzes und des Tragflansches verläuft und die Seitenfläche von einem rechten Winkel abweichend zur Stirnfläche verläuft, und/oder
- die Seitenfläche rechtwinklig zur Anschluss-Ebene des Tragansatzes und des Tragflansches verläuft und die Stirnfläche von einem rechten Winkel abweichend zur Seitenfläche verläuft, und/oder
- die Seitenfläche von einem rechten Winkel abweichend zur Anschluss-Ebene des Tragansatzes und des Tragflansches verläuft und die Stirnfläche von einer Parallelität abweichend zur Anschluss-Ebene des Tragansatzes und des Tragflansches verläuft.

Erfindungsgemäß weist der Tragansatz und/oder der Tragflansch eine Lochung zur Durchführung einer Schraube, eines Bolzens oder dergleichen Haltelements, wie zum Beispiel zur Bildung einer Schraubverbindung, auf, um den Tragansatz und den Tragflansch lösbar fest miteinander zu verbinden. Insbesondere kann die Lochung eine Lochreihe mit einer Mehrzahl von Löchern zur Durchführung einer Mehrzahl von Schrauben, Bolzen oder dergleichen Haltelemente aufweisen, um den Tragansatz und den Tragflansch lösbar fest miteinander zu verbinden.

Hinsichtlich des Statorträger-Elements hat es sich als besonders vorteilhaft erwiesen, dass - der erste Stator-Tragarm und der zweite Stator-Tragarm an dem innen-teilumfänglichen Stator-Tragansatz radial zu einer Zentrierachse einstückig anschließen, insbesondere der innen-teilumfängliche Stator-Tragansatz zur lösbar festen Verbindung mit dem Aufnahmeflansch und/oder der Aufnahmeflansch zur lösbar festen Verbindung mit dem Aufnahmezapfen ausgebildet ist.

Vorzugsweise kann ein Stator-Tragarm und/oder Stator-Schenkel in Form eines den ersten und zweiten Flächensektor überdeckenden Flachteils, insbesondere Speichen-Teils, gebildet sein, insbesondere in der oben erläuterten Weise.

Hinsichtlich des Statorträger-Elements hat es sich als besonders vorteilhaft erwiesen, dass an den ersten und zweiten Stator-Tragarm ein Stator-Tragring-Segment in Form einer Berandungszarge und im Querschnitt T-förmig, insbesondere mittig, anschließt. Diese Maßgabe hat sich als besonders vorteilhaft zur Bildung eines innerhalb des Läuferträgers anzuordneten Statorträgers erwiesen.

Insbesondere ist diese Maßgabe vorteilhaft für den Fall, dass der Läufer als Außenläufer beim Generator vorgesehen wird.

Dementsprechend hat es sich weiterhin als vorteilhaft erwiesen, dass an den ersten und zweiten Läufer-Tragarm ein Läufer-Tragring-Segment in Form einer Berandungszarge im Querschnitt L-förmig, insbesondere seitlich, anschließt. Insofern kann man bildlich gesehen den Läuferträger in etwa topfartig ausbilden, indem der Statorträger eingesetzt wird unter Belassen eines Luftspalts. Die vorgenannten Weiterbildungen hinsichtlich des Statorträger-Elements und Läuferträger-Elements betreffend die Anordnung der Brandungszarge tragen diesen Überlegungen in besonders bevorzugter Weise Rechnung.

Hinsichtlich des Läuferträger-Elements hat es sich als besonders vorteilhaft erwiesen, dass
- der erste Läufer-Tragarm und der zweite Läufer-Tragarm an dem innen-teilumfänglichen Läufer-Tragansatz radial zu einer Zentrierachse einstückig anschließen, insbesondere der innen-teilumfängliche Läufer-Tragansatz zur lösbar festen Verbindung mit dem Nabenflansch und/oder der Nabenflansch zur lösbar festen Verbindung mit der Nabe ausgebildet ist.

Insbesondere kann ein Läufer-Tragarm und/oder Läufer-Schenkel in Form eines den Flächensektor überdeckenden Flachteils, insbesondere Speichen-Teils, gebildet ist.

Hinsichtlich des Systems aus einem mehrelementigen Statorträger mit einer Anzahl von Statorträger-Elementen und/oder einem mehrelementigen Läuferträger mit einer Anzahl von Läuferträger-Elementen hat es sich als besonders vorteilhaft erwiesen, dass jedes der Trägerelemente von einem anderen Trägerelement abnehmbar und wieder ansetzbar ist. Insbesondere kann jedes der Trägerelemente von einem anderen Trägerelement abnehmbar und wieder ansetzbar sein mit einer eigenen elektrischen Generatorfunktion. Insbesondere kann dadurch gewährleistet sein, dass selbst mit der elektrischen Generatorfunktion die Trägerelemente getrennt transportierbar sind.

Zur Darstellung einer Generatorfunktion hat es sich bereits als vorteilhaft erwiesen, wenn die Trägerelemente entsprechende Wicklungen auf dem Tragring und die Anschlussverkabelung und die Polpakete aufweisen.

Hinsichtlich des Generatorträgers hat es sich als vorteilhaft erwiesen, dass wenigstens ein Statorträger oder wenigstens ein Läuferträger oder wenigstens ein Statorträger und wenigstens ein Läuferträger vorgesehen sind.

Insbesondere ist es auch möglich, dass der Generatorträger mit wenigstens einem Statorträger gebildet ist, in Kombination mit einem unteilbaren, das heißt insbesondere einelementigen, Läuferträger gebildet ist. Insbesondere hat es sich als vorteilhaft erwiesen, dass dieser mit wenigstens einem Läuferträger gebildet ist, in Kombination mit einem unteilbaren, insbesondere einelementigen Statorträger. Eine solche Weiterbildung berücksichtigt, dass gegebenenfalls ein Stator oder Rotor ungeteilt zu transportieren ist, wenn es eher vorteilhaft ist, diesen einelementig im Werk vollständig auszubilden.

Hinsichtlich des Generators hat es sich dementsprechend als besonders vorteilhaft erwiesen, dass jedes der Statorträger-Elemente und Läuferträger-Elemente mit einem eigenen elektrischen Anschluss ausgebildet ist, der dazu vorgesehen ist, eine eigenen funktionsfähige Generatorfunktion zur Verfügung zu stellen.

Das Konzept der Erfindung erstreckt sich somit nicht nur auf Statorträger-Elemente beziehungsweise Läuferträger-Elemente wie vorgenannt, sondern auch auf Statorelemente beziehungsweise Läuferelemente umfassend jeweils ein Trägerelement und die zugehörige vollständige Generatorfunktion mit den entsprechenden Wicklungen und elektrischen Anschlüssen. Insofern ist gewährleistet, dass ein Generator mit beispielsweise wenigstens zwei, drei oder vier oder mehr Statorelementen und wenigstens zwei, drei oder vier oder mehr Läuferelementen bereits dann funktionsfähig ist, wenn nur eines der Statorelemente und Läuferelemente funktionsfähig ist.

Im Rahmen einer besonders bevorzugten Weiterbildung kann für den Generator vorgesehen sein, dass an jedem der Statorträger-Elemente mit einer Stator-Wicklung und/oder an jedem der Läuferträger-Elemente mit einer Läuferwicklung, also zum Zwecke einer eigenen funktionsfähigen Generatorfunktion, jeweils ein eigener funktionsfähiger Anschluss an einen Netzanschluss für die eigene funktionsfähige Generatorfunktion vorgesehen ist. Insbesondere ist für den funktionsfähigen Anschluss vorgesehen, dass jeweils ein Gleichrichter, ein Gleichstromleiter, ein Wechselrichter und ein Transformator an ein Statorelement, das heißt Statorträger-Element mit einer Stator-Wicklung und/oder Läuferelement, das heißt Läuferträger-Element mit einer Läuferwicklung angeschlossen ist.

Die Erfindung bietet in vorteilhafter Weise die Grundlage für eine Weiterbildung der Gondel mit dem Generator-Tragsystem, wobei das Generator-Tragsystem mit dem Generator von der Gondelverkleidung und der Rotornabe umgeben sein kann.

Grundsätzlich lassen sich die Trägerelemente, insbesondere ein Statorelement oder Läuferelement mit entsprechenden Wicklungen, auch wetterfest ausbilden, sodass das Generator-Tragsystem von der Gondelverkleidung umgeben sein kann, wobei der Generator zwischen Rotornabe und hinterer Gondelverkleidung herausragt.

Im Rahmen des Verfahrens hat es sich als besonders vorteilhaft erwiesen, dass die Rotornabe auf dem Achszapfen vormontiert wird zur Bildung einer Nabenlagerung. Dies kann insbesondere ab Werk geschehen.

Weiter ist im Rahmen der Weiterbildung des Verfahrens vorgesehen, dass die Nabenlagerung mit dem Achszapfen an den Aufnahmezapfen des Maschinenträgers gesetzt wird. Dies vereinfacht erheblich die Montage am Aufbauort der Windenergieanlage, wenn die Nabenlagerung wie genannt, bereits vormontiert ist an dem Achszapfen.

Anschließend kann die Anzahl von Rotorblättern zur Bildung des Rotors an die Blattflanschlager der Rotornabe angesetzt werden. Vorteilhaft weist die Rotornabe drei Blattflanschlager für drei Rotorblätter auf.

Der Generator wird im Rahmen des Verfahrens vorteilhaft als ein Synchrongenerator für eine getriebelose Windenergieanlage in Form eines Ring-Generators montiert.

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Zudem fallen in den Rahmen der Erfindung alle Kombinationen aus zumindest zwei der in der Beschreibung, der Zeichnung und/oder den Ansprüchen offenbarten Merkmale. Die allgemeine Idee der Erfindung ist nicht beschränkt auf die exakte Form oder das Detail der im folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte offenbart und beliebig einsetzbar und beanspruchbar sein. Der Einfachheit halber sind nachfolgend für identische oder ähnliche Teile oder Teile mit identischer oder ähnlicher Funktion gleiche Bezugszeichen verwendet.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

Im Einzelnen zeigt die Zeichnung in:

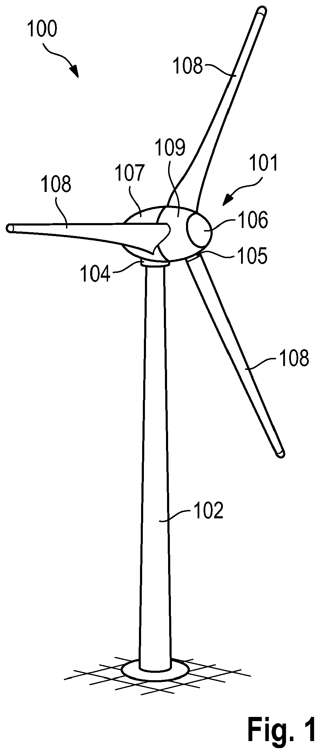

- FIG. 1: den Aufbau einer Windenergieanlage mit einem Turm und einer Gondel - -vorliegend als eine getriebelose Windenergieanlage mit einem Synchrongenerator als Langsamläufer in Form eines Ring-Generators-- im Rahmen einer besonders bevorzugten Ausführungsform;

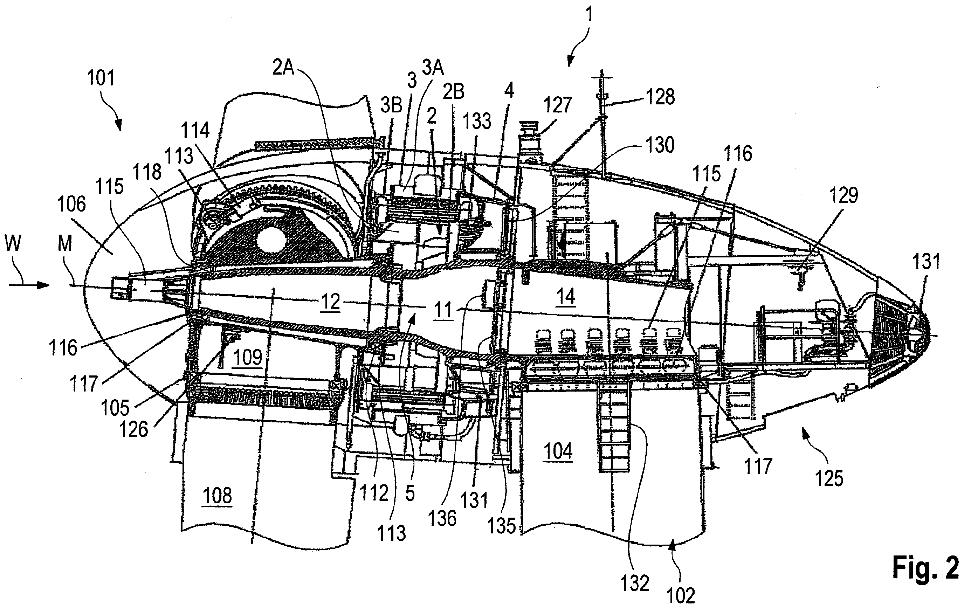

- FIG. 2: einen Längsschnitt durch die Gondel der Windenergieanlage der FIG.1 unter Darstellung des Generator-Tragsystems mit einem Generator, nämlich insbesondere mit einem Kopfflansch des Turms, einem Maschinenträger, einem Aufnahmezapfen und einem Achszapfen und einer daran gelagerten Rotornabe, gemäß einer bevorzugten Ausführungsform;

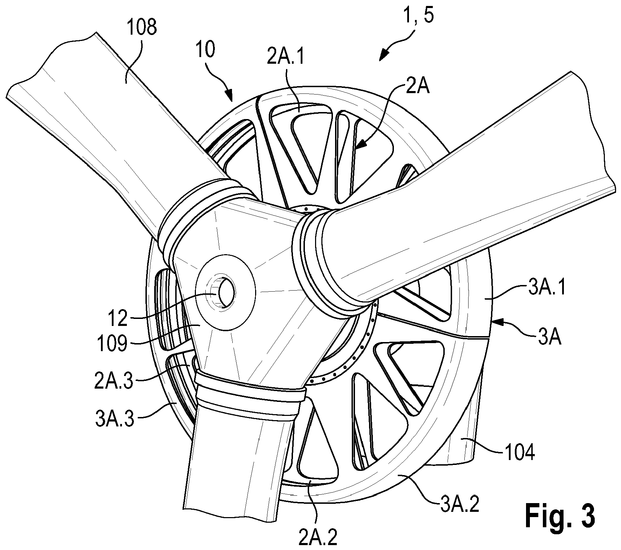

- FIG. 3: eine perspektivisch vereinfachte Darstellung des Generator-Tragsystems, wie es in Bezug auf FIG.2 im Detail erläutert ist, gemäß einer bevorzugten Ausführungsform, wobei von einem Generator lediglich der Generatorträger zwischen dem Aufnahmezapfen am Maschinenträger und der Rotornabe auf dem Achszapfen gezeigt ist;

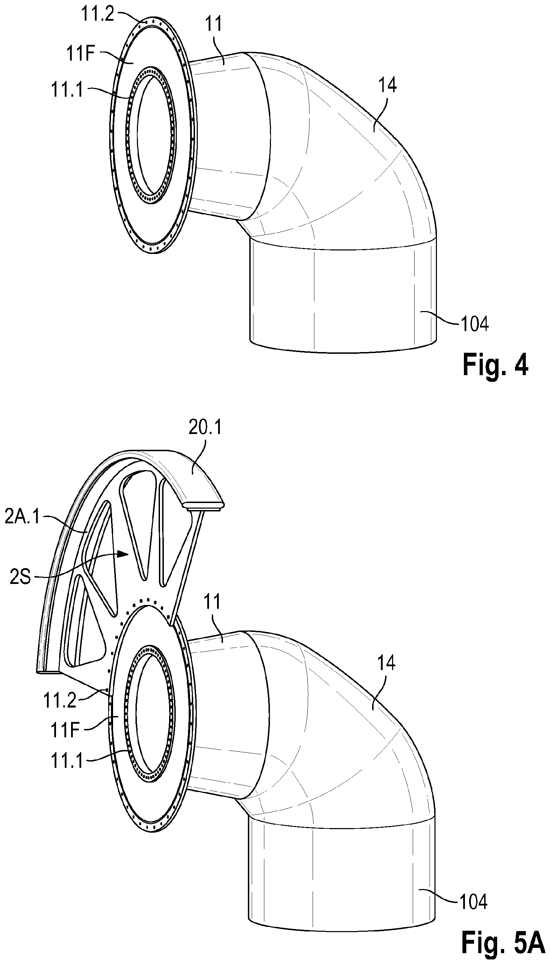

- FIG. 4: eine vereinfachte Darstellung des Kopfflansches des Turms mit dem Maschinenträger und dem Aufnahmezapfen sowie dem Aufnahmeflansch für den Statorträger, wie dies in Bezug auf FIG.3 erläutert ist;
- FIG. 5A: eine vereinfachte Darstellung des teilweise zusammengesetzten Statorträgers mit einem Statorträger-Element am Aufnahmeflansch der FIG.4;

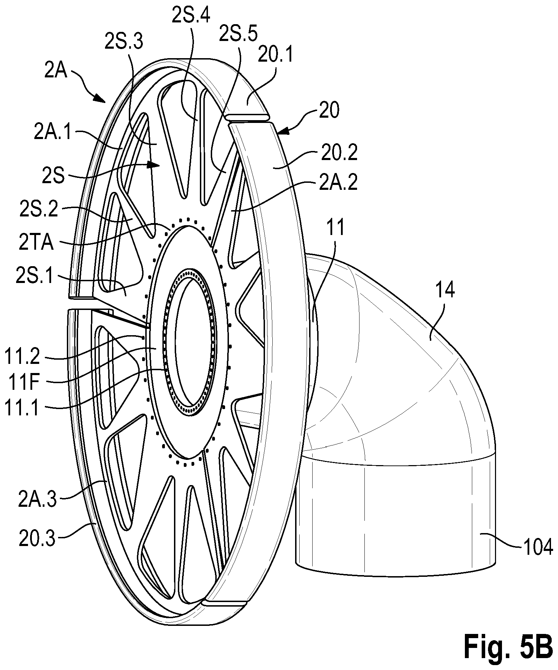

- FIG. 5B: eine perspektivische Darstellung einer verdrehten Anordnung von unterschiedlichen, vorliegend drei, Statorträger-Elementen und unter umfänglichen Versatz der unterschiedlichen Stator-Tragring-Segmente des Stator-Tragrings zur Bildung eines kompletten Statorträgers an dem Aufnahmeflansch der FIG.5A;

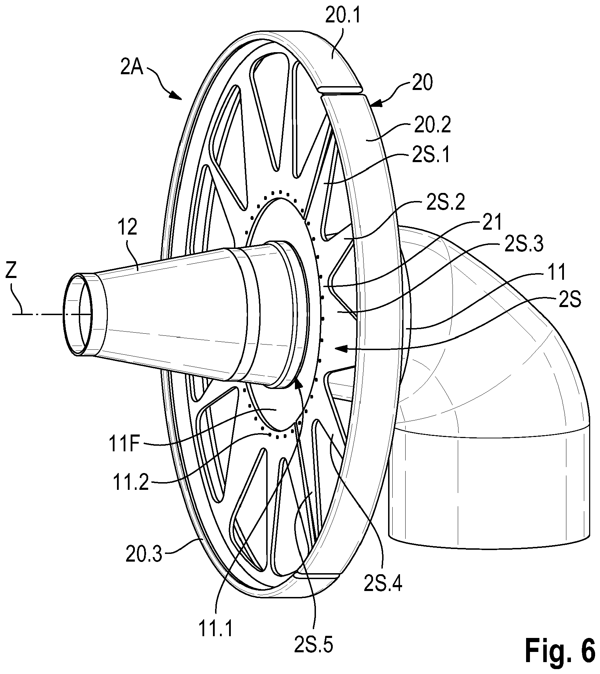

- FIG. 6: eine perspektivische Darstellung des Statorträgers am Aufnahmeflansch des Aufnahmezapfens sowie mit dem angesetzten Achszapfen zur Aufbringung einer Rotornabe für ein Generator-Tragsystem;

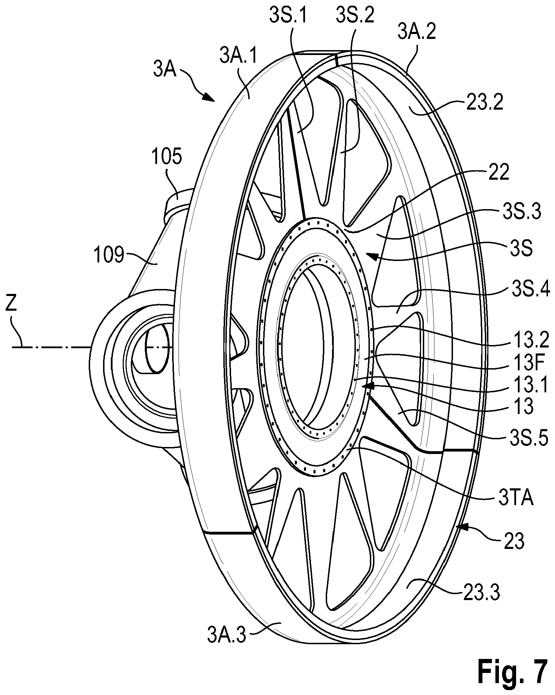

- FIG. 7: eine perspektivische Darstellung des Läuferträgers mit einer verdrehten Anordnung von unterschiedlichen, vorliegend drei, Läuferträger-Elementen und damit unter umfänglichen Versatz der unterschiedlichen Läufer-Tragring-Segmente des Läufer-Tragrings an einem Nabenflansch an der Rotornabe eines Rotors zur Anbringung auf dem Achszapfen der FIG.6;

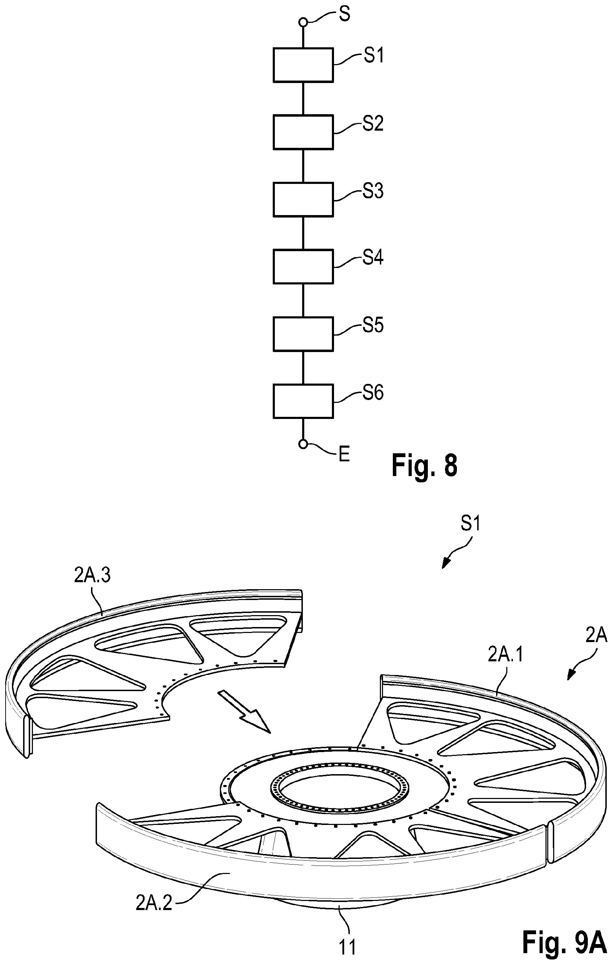

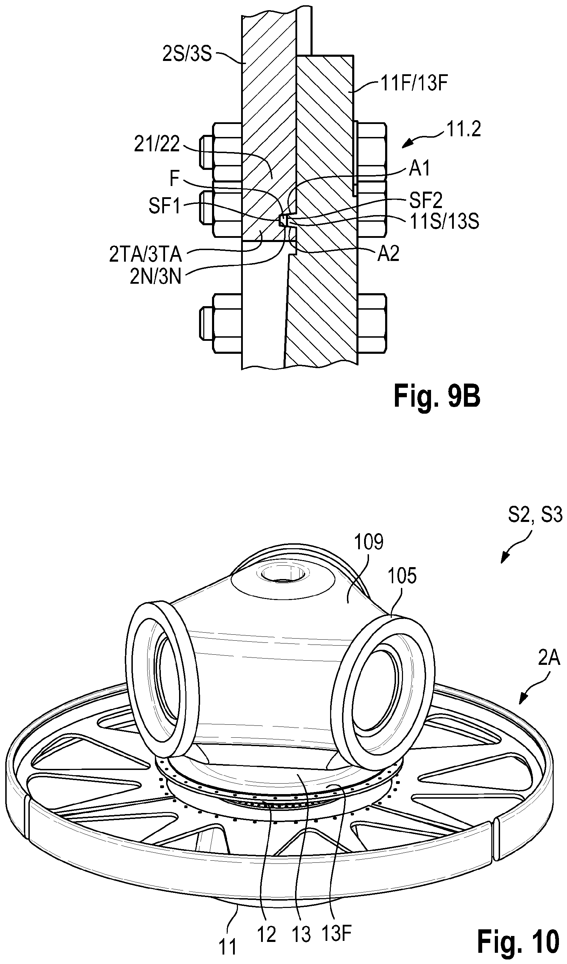

- FIG. 8: ein Ablaufdiagramm zur Durchführung eines Montageverfahrens, insbesondere an einem Aufbauort einer Windenergieanlage, für ein Generator-Tragsystem, insbesondere unter Bezug auf die FIG.9 bis FIG.13;
- FIG. 9A: eine Explosionsansicht zur Erläuterung der Montage eines Statorträgers wie in FIG.5B gemäß einem ersten Schritt des Montageverfahrens der FIG.8;
- FIG. 9B: eine Detaildarstellung einer bevorzugten Ausführungsform eines Stator-Tragansatzes mit einem ersten Passelement und eines Aufnahmeflansches als Tragflansch mit einem zweiten Passelement, wobei das erste und zweite Passelement --hier als Female-Teil einer eine innenteilumfänglichen Nut und Male-Teil eines vollumfänglichen Stegs -- , aufeinander abgestimmt sind gemäß einem ersten Schritt des Montageverfahrens der FIG.8;
- FIG. 10: eine perspektivische Darstellung zur Erläuterung der Lagerung der Rotornabe mit dem Nabenflansch auf dem Achszapfen bei der Montage, wobei dieser (wie in FIG.6 gezeigt) am Aufnahmezapfen angesetzt ist, wobei der Aufnahmeflansch des Aufnahmezapfens den Statorträger hält gemäß einem zweiten und dritten Schritt des Montageverfahrens der FIG.8;

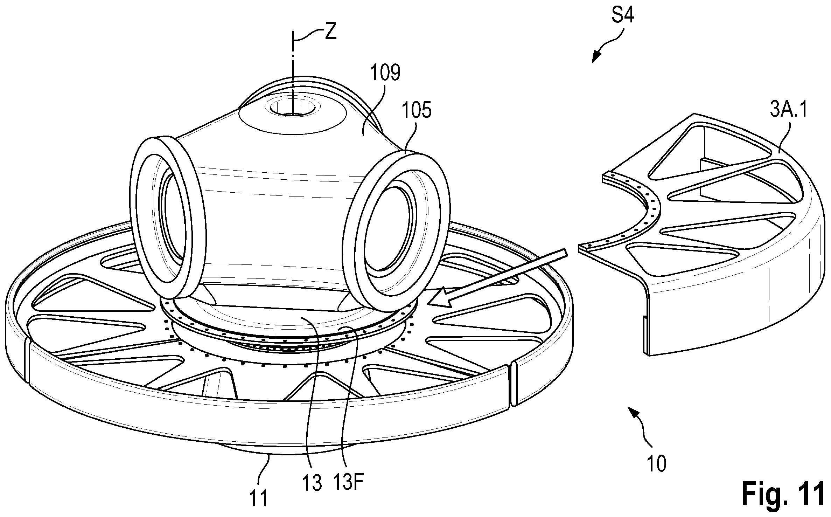

- FIG. 11: eine Explosionsansicht zur Erläuterung der Montage des Läuferträgers wie in FIG.7 am teilweise zusammengesetzten Generatorträger bzw. Generator-Tragsystem der FIG.10, wobei ein Läuferträger-Element radial eingeschoben wird zur Anbringung mit seinem Läufer-Tragansatz an dem vollumfänglichen Nabenflansch gemäß einem vierten Schritt des Montageverfahrens der FIG.8;

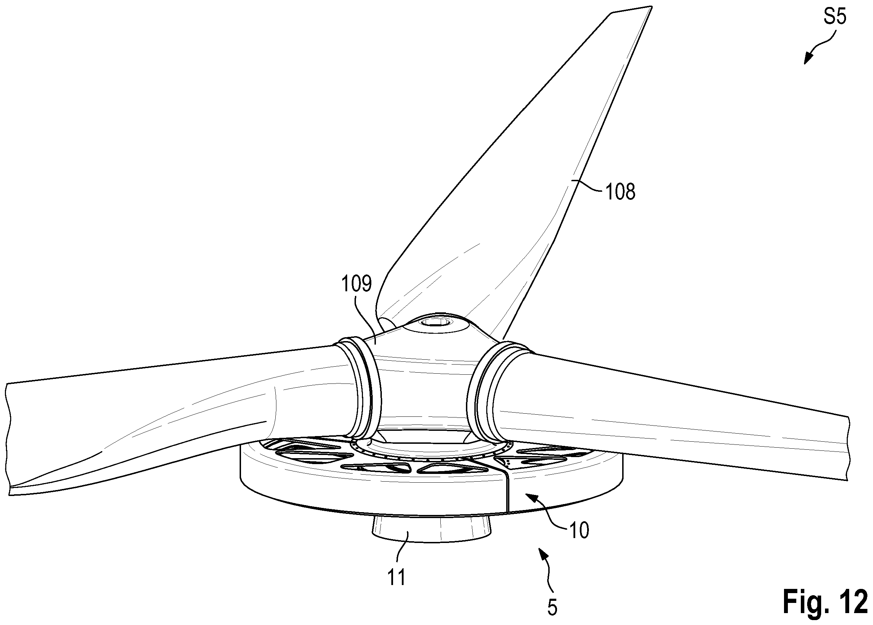

- FIG. 12: eine perspektivische Darstellung zur Erläuterung der Montage der Rotorblätter für den Rotor am teilweise zusammengesetzten Generatorträger bzw. Generator-Tragsystem der FIG.11 gemäß einem fünften Schritt des Montageverfahrens der FIG.8;

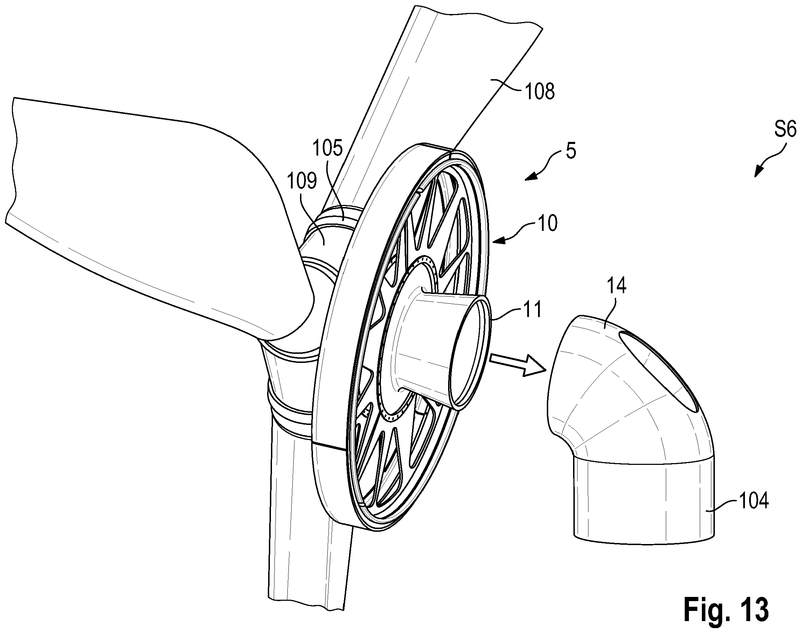

- FIG.13: in einer Explosionsansicht betreffend die Anbringung des zusammengesetzten Generatorträgers mit Rotor an den Maschinenträger unter Anflanschen des Aufnahmezapfens an den Maschinenträger zur Vervollständigung des Generator-Tragsystems gemäß einem sechsten Schritt des Montageverfahrens der FIG.8.

FIG.1 zeigt eine Windenergieanlage 100 in einer perspektivischen Ansicht mit einem Turm 102, einer auf dem Turm 102 angeordneten Gondel 101, die eine Rotornabe 109 mit drei Rotorblättern 108 aufweist. Die Gondel 101 weist weiter eine an die Rotornabe 109 angrenzende hintere Gondelverkleidung 107 auf, die den nicht näher gezeigten nichtrotierenden Teil der Gondel 101 umgibt; also etwa den weiter unten erläuterten Maschinenträger, den Generator, die Leistungselektronik etc.; dabei kann gemäß einer bevorzugten Ausführungsform der Generator auch, mit entsprechend großem Durchmesser, --etwa mit dem äußeren Umfangsbereich des rotierenden Läufers (Außenläufer)-zwischen Rotornabe 109 und angrenzender hinteren Gondelverkleidung 107 aus der Gondel 101 herausragen.

Weiterhin ist eine sogenannte Spinnerverkleidung 106 an der Rotornabe dargestellt, die bestimmungsgemäß entgegen der Windrichtung ausgerichtet ist. Der Bereich der Spinnerverkleidung 106 wird auch als vorderer Teil der Gondel 101 oder vordere Gondelverkleidung bezeichnet. Insofern wird bei der Gondel 101 grundsätzlich zwischen einem vorderen Bereich der Spinnerverkleidung 106, die Rotornabe 109 und einem hinteren Bereich der hinteren Gondelverkleidung 107 unterteilt. Im Bereich der Ansätze der Rotorblätter 108 ist eine Rotorblattwurzel an ein Blattflanschlager 105 angesetzt, das in einer in FIG.2 näher bezeichneten Weise ein Rotorblatt 108 hält - Rotornabe 109 mit Spinnerverkleidung 106 und Rotorblattwurzel mit Blattflanschlager 105 und Rotorblättern 108 wird auch als Rotor bezeichnet.

Der Turm 102 weist einen Kopfflansch 104 auf, auf den ein in FIG.2 näher bezeichneter Maschinenträger 14 aufgesetzt ist, um die in der Gondel 101 untergebrachten Einbauten, insbesondere hier das Generator-Tragsystem 5, den Generator 1 und diverse Leistungselektronik etc. anzubringen und zur Verfügung zu stellen.

Nicht ausführlich gezeigt in FIG.1 sind die üblichen elektrischen Einrichtungen zum Anschluss einer Windenergieanlage an ein öffentliches Netz und die diverse Leistungselektronik, wie Gleichrichter, Gleichstromleiter, Wechselrichter und Transformatoren - diese können je nach Zweckmäßigkeit in der Gondel 101, im Turm 102 oder davon getrennt in einem Schalthaus in unmittelbarer Nähe der Windenergieanlage 100 oder (beispielsweise im Falle eines Windparks oder einer Offshore-Windenergieanlage) in einem Schalthaus untergebracht sein, das vergleichsweise weit von der Windenergieanlage 100 entfernt ist.

FIG.2 zeigt den grundsätzlichen Aufbau und die Einbauten der Gondel 101, die dazu in einer Schnittansicht entlang eines Längsschnittes gezeigt ist; entlang einer Achse M, welche im Wesentlichen einer Windanströmrichtung W entspricht. Die in FIG.2 gezeigten Einbauten und Anbauten der Gondel 101 weisen im Wesentlichen die folgenden Elemente auf: ein Rotorblatt 108, ein Blattflanschlager 105, ein Blattverstellgetriebe 113, einen Blattverstellmotor 114, einen Schleifringkörper 115, einen Achsdeckel 116, einen vorderen Lagerdeckel 117, ein zweireihiges Kegelrollenlager 118, die vorgenannte Rotornabe 109. Der Schleifringkörper 115 ist vorliegend innerhalb der Spinnerverkleidung 106 untergebracht.

Ein Generator-Tragsystem 5 weist wenigstens einen Achszapfen 12 und einen Aufnahmezapfen 11 auf zur Anbringung an einem Maschinenträger 14 am Kopfflansch 104 des Turms 102; ggfs. mag man unter einem Generator-Tragsystem 5 auch wenigstens einen Achszapfen 12 und einen Aufnahmezapfen 11 und einen Maschinenträger 14 verstehen zur Anbringung an einem Kopfflansch 104 des Turms 102. Außerdem ist ein Zylinderrollenlager 112, ein hinterer Lagerdeckel 113 und eine Azimutlagerung erkennbar mit einem Azimutmotor 115, einem Azimutgetriebe 116, einem Azimutlager 117 sowie den vorgenannten Turm 102 mit dem vorgenannten Kopfflansch 104 auf.

Die Gondel 101 weist darüber hinaus eine Zentralschmieranlage 126, eine Flugbefeuerung 127 und einen Kombi-Windgeber 128 auf. Über einen Elektrokettenzug 129 kann durch eine Lastenöffnung 125 darunter Zubehör in die Gondel 101 transportiert werden beziehungsweise aus dieser herausgebracht werden; eine Traglast des Elektrokettenzugs liegt beispielsweise bei 250 Kilogramm.

Die Gondel 101 kann unter anderem über den Turm 102, nämlich über eine Einstiegsleiter 132 betreten werden, die vom Turm 102 zur Gondel 101 reicht. Dazu ist eine nicht näher bezeichnete Einstiegsöffnung durch den Kopfflansch 104 des Turms 102 vorgesehen.

Zur Belüftung der Gondel 101 weist diese einen Gondellüfter 130 und einen passiven Hecklüfter 131 auf.

Der Achszapfen, Aufnahmezapfen und Maschinenträger 10, 11, 14 dient als Generator-Tragsystem zum Aufnahmen und Tragen eines im Folgenden näher erläuterten Generators 1. Der Generator 1 ist vorliegend als Ring-Generator in Form eines langsam laufenden Synchrongenerators ausgebildet. Der Läufer 3 des Generators 1 kann relativ zum Stator 2 mittels einer elektromagnetischen Bremszange 131 und einer Arretierung 133 festgesetzt werden; z.B. um zu Sevicezwecken den Läufer 3 relativ zum Stator 2 festzusetzen.

Der in FIG.2 gezeigte Generator 1 ist als ein Ring-Generator mit einem Läufer 3 und einem Stator 2 gebildet. Der Läufer 3 weist einen Läuferträger 3A auf, an dem eine Läuferwicklung 3B an Polpaketen aufgebracht ist. Der Stator 2 weist einen Statorträger 2A auf, an dem eine Stator-Wicklung 2B auf Statorpaketen aufgebracht ist. Der Stator 2 ist mittels einer Statorglocke 4 am Aufnahmezapfen 11 festgemacht, welcher wiederum am Maschinenträger 14 angebracht ist. Der Läufer 3 ist mit der Rotornabe 109 verbunden und dreht sich mit dieser, wobei die Rotornabe 109 mittels der genannten Kegelrollenlager 118 und Zylinderrollenlager 112 auf dem Achszapfen 12 drehend gelagert ist. Der Generator 1 ist somit als ein Außenläufergenerator mit innenliegendem Stator und außenliegendem Rotor 2, 3 gebildet. Die Anordnung eines Maschinenträgers 14 mit angeflanschtem Aufnahmezapfen und Achszapfen 11, 12 bildet insofern ein am Kopfflansch 104 des Turms 102 angebrachtes Generator-Tragsystem 5 für den Generator 1 beziehungsweise mit dem Generator 1. Der Läuferträger 3A ist insofern mittelbar vom Achszapfen 12 getragen; der Statorträger 2A ist insofern unmittelbar vom Aufnahmezapfen 11 getragen.

Das Generator-Tragsystem 5 ist vorliegend hohl ausgebildet und entlang einer Mittenachse M angeordnet. Die Mittenachse M bildet insofern eine Rotationsachse für den Läufer 3 und eine mittige Achse für den Achszapfen 12, den Aufnahmezapfen 11 und den Maschinenträger 14. Außerdem ist im Aufnahmezapfen ein Einsatz 135 mit einem Gebläse 136 im Aufnahmezapfen 11 vorgesehen. Das Gebläse 136 kann somit die Luft in den Innenraum des Generator-Tragsystems 5 aus Maschinenträger 14, Aufnahmezapfen 11 und Achszapfen 12 bewegen. Des Weiteren ist der Generator 1 mit Läufer 3 und Stator 2 mit dem zugeordneten Statorträger 2A und Läuferträger 3A dargestellt.

Das Generator-Tragsystem 5 mit dem Generator 1 ist in der folgenden FIG.3 stellvertretend mittels des Generatorträgers 10 (also dann ohne den Generator 1) auf dem Maschinenträger 14 mit Aufnahmezapfen 11 und Achszapfen 12 und zudem ist in FIG.3 der Rotor gezeigt. Die auf dem Achszapfen 12 gelagerte Rotornabe 109 des Rotors ist dabei mit den Blattflanschlagern 105 für die Rotorblätter 108 des Rotors erkennbar.

Jeder der Träger 2A, 3A ist mit einer in FIG.3 näher dargestellten Anzahl von Stator-Trägerelementen 2A.1, 2A.2, 2A.3 beziehungsweise Läuferträger-Elementen 3A.1, 3A.2, 3A.3 gebildet. Dieser Aufbau ist im Einzelnen anhand der folgenden FIG.4 bis FIG.6 bzw. Fig. 7 grundsätzlich erläutert. Ein Montageverfahren für den Generatorträger ist in FIG.8 bis FIG.13 erläutert.

Im Einzelnen zeigt dazu FIG.3 und FIG.4 den Kopfflansch 104 des Turms 102 mit darauf aufgesetztem Maschinenträger 14 und daran angeflanschten Aufnahmezapfen 11. Der Aufnahmezapfen 11 ist insofern stirnseitig des Maschinenträgers 14 angebracht.

Des Weiteren ersichtlich in FIG.4 der Aufnahmezapfen 11 mit einem Aufnahmeflansch 11F versehen. Der vollumfängliche Tragflansch in Form des Aufnahmeflansches 11F ist vorliegend an dem Aufnahmezapfen 11 angefügt oder mittels einer Ringreihe von innenumfänglich angebrachten Schraubverbindungen 11.1 angebracht. Zusätzlich oder alternativ kann die Ringreihe von innen-umfänglich angebrachten Schraubverbindungen 11.1 auch zur Anbringung des Achszapfens 12 am Aufnahmezapfen 11 dienen. Der Aufnahmeflansch 11F weist des Weiteren eine außenumfängliche Lochung zur Durchführung einer Schraube, eines Bolzens oder dergleichen Haltelements auf, um einen Tragansatz eines Statorträger-Elements 2A.1, 2A.2, 2A.3 und den Aufnahmeflansch 11F lösbar fest miteinander zu verbinden; also hier eine Ringreihe von Löchern zur Anbringung von Schraubverbindungen 11.2.

Außenumfänglich des Aufnahmeflansches werden die Statorträger-Elemente 2A.1, 2A.2, 2A.3 des Statorträgers 2A wie im Folgenden erläutert angesetzt.

Wie aus FIG.5A ersichtlich ist vorliegend eine Anzahl von drei Statorträger-Elementen 2A.1, 2A.2, 2A.3 vorgesehen, die verdreht zueinander angeordnet an dem Aufnahmeflansch 11F lösbar über die genannten Schraubverbindungen 11.2 angebracht.

FIG.5B zeigt im Einzelnen dazu die vorliegend drei Statorträger-Elemente 2A.1, 2A.2, 2A.3 in angebrachtem Zustand am Aufnahmeflansch 11F, wobei vorliegend die Statorträger-Elemente auf einer 0-Uhr-, 4-Uhr- und 8-Uhr-Position angebracht sind und jeweils einen Winkel von 120° überdecken. Die drei Statorträger-Elemente 2A.1, 2A.2, 2A.3 sind im Wesentlichen baugleich gebildet und damit in der genannten Weise jeweils einem Flächensektor der Generatorfläche zugeordnet; vorliegend überstreicht der Flächensektor also einen Winkel von 120°.

Wie des Weiteren aus FIG. 5B ersichtlich ist, weist jedes der Statorträger-Elemente 2A.1, 2A.2, 2A.3 einen Stator-Schenkel 2S auf, der hier eine Anzahl von fünf radial verlaufenden Stator-Tragarmen 2S.1, 2S.2, 2S.3, 2S.4, 2S.5 hat. Innenumfänglich bilden alle Stator-Schenkel 2S zusammen einen vollumfänglichen Stator-Tragansatz 2TA. Die Stator-Tragarme 2S.1, 2S.2, 2S.3, 2S.4, 2S.5 des Stator-Schenkels 2S schließen außenumfänglich an ein Stator-Tragring-Segment 20.1 an. Unter der genannten verdrehten Anordnung der vorliegend drei Statorträger-Elemente 2A.1, 2A.2, 2A.3 werden somit unterschiedliche Stator-Tragring-Segmente 20.1, 20.2, 20.3 zur Bildung des Stator-Tragrings 20 zusammengesetzt.

Ein Stator-Schenkel 2S ist mit den Stator-Tragarmen 2S.1, 2S.2, 2S.3, 2S.4, 2S.5 vorliegend in Form eines den Flächensektor von 120° überdeckenden Flachteils gebildet. Der Stator-Schenkel 2S ist hier also mit den Stator-Tragarmen als Speichenteil gebildet. Das Stator-Tragring-Segment 20.1, 20.2, 20.3 zur Bildung des Stator-Tragrings 20 ist hier in Form einer Berandungszarge ausgebildet und im Querschnitt T-förmig mittig angeschlossen angeschlossen an die Stator-Tragarme 2S.1, 2S.2, 2S.3, 2S.4, 2S.5.

Gemäß FIG. 6 ist jeder Stator-Tragarm 2S.1, 2S.2, 2S.3, 2S.4, 2S.5 einstückig an einem innen-teilumfänglich verlaufenden Stator-Tragansatz 21, hier radial zu einer Zentrierachse Z, angeschlossen. Alle innen-teilumfänglich verlaufenden Stator-Tragansätze 21 der drei Statorträger-Elementen 2A.1, 2A.2, 2A.3 bilden zusammen den vollumfänglichen Stator-Tragansatz 2TA. Der Stator-Tragansatz 21 selbst ist zur lösbar festen Verbindung mit dem Aufnahmeflansch 11F mittels der vorgenannten Ringreihe von Verschraubungen 11.2 vorgesehen. Der Aufnahmeflansch 11F selbst wiederum ist zur lösbar festen Verbindung mit dem Aufnahmezapfen 11 über die vorgenannte Ringreihe von Schraubverbindungen 11.1 vorgesehen. Diese Ringreihe von Schraubverbindungen 11.1 kann wie vorliegend auch zur Anbindung eines Achszapfens 12 wie in FIG. 6 gezeigt dienen. Alternativ kann auch der Aufnahmeflansch 11F unlösbar an den Aufnahmezapfen angefügt sein und die Ringreihe von Schraubverbindungen 11.1 ausschließlich zur Anbringung des Achszapfens 12 genutzt werden.

Die in FIG. 6 gesetzten Bezugszeichen für den Stator-Schenkel 2S mit den Stator-Tragarmen 2S.1, 2S.2, 2S.3, 2S.4, 2S.5 gelten in gleicher Weise für alle im Wesentlichen baugleichen Statorträger-Elemente 2A.1, 2A.2, 2A.3 und werden deswegen in FIG. 5B für das erste Statorträger-Element 2A.1 und in FIG. 6 auch für das zweite Statorträger-Element 2A.2 verwendet; der Übersichtlichkeit halber sind diese nicht auch für das dritte Statorträger-Element 2A.3 eingetragen.

Des Weiteren ist ein Läuferträger-Element 3A.1, 3A.2, 3A.3 mit einer entsprechenden Bezeichnung der für einen Läufer 3 spezifischen Merkmale wie zuvor erläutert analog einem Statorträger-Element 2A.1, 2A.2, 2A.3 der FIG.5A und FIG.5B aufgebaut. Dazu ist in FIG. 7 die analoge Notation von Teilen für ein Läuferträgerelement 3A.1, 3A.2, 3A.3 eines Läuferträgers 3A genutzt. Jedes Läuferträgerelement weist entsprechend einen Läuferschenkel 3S mit einem innen-teilumfänglich verlaufenden Läufertragansatz 22 auf. Alle innen-teilumfänglich verlaufenden Läufer-Tragansätze 22 der drei Läuferträger-Elemente 3A.1, 3A.2, 3A.3 bilden zusammen einen vollumfänglichen Läufer-Tragansatz 3TA. Vom Läufertragansatz 22 radial ausgehend hat der Läuferschenkel 3S vorliegend eine Anzahl von fünf Läufertragarmen 3S.1, 3S.2, 3S.3, 3S.4, 3S.5.

Ganz analog wie beim Statorträger 2A zur Bildung des Stator-Tragrings 20 ist auch beim Läuferträger 3A zur Bildung eines Läufertragrings 23 jeweils ein an wenigstens einem, hier allen, Läufertragarm 3S.1, 3S.2, 3S.3, 3S.4, 3S.5 des Läuferschenkels 3S anschließendes außenumfänglich verlaufendes Läufertragringsegment 23.1, 23.2, 23.3 vorgesehen.

Bei vorliegend drei Läuferträgerelementen 3A.1, 3A.2, 3A.3 ist jedes Läuferträgerelement einem Flächensektor von 120° zugeordnet und überdeckt diesen als Flachteil. Jeder Läuferschenkel 3S ist vorliegend also als Speichenteil gebildet mit den Läufertragarmen 3S.1, 3S.2, 3S.3, 3S.4, 3S.5. Ein Läufertragringsegment 3A.1, 3A.2, 3A.3 bildet insgesamt den Läufertragring 30 als Berandungszarge, die im Querschnitt L-förmig und seitlich an die Läufertragarme 3S.1, 3S.2, 3S.3, 3S.4, 3S.5 anschließt.

In FIG. 7 ist außerdem ersichtlich, dass jeder Läufertragansatz 22 radial zu einer Zentrierachse angeordnet ist, welche im Wesentlichen auch die Anordnungsachse des Achszapfens 12 ist; und auf diesem die Anordnungsachse der Rotornabe 109 mit Blattflanschlagern 105 ist. FIG. 7 zeigt insofern einen Läuferträger 3A mit den Läuferträgerelementen 3A.1, 3A.2, 3A.3 zur Bildung eines im Wesentlichen topfförmigen Läuferträgers 3A, der an einem Nabenflansch 13F des hier gezeigten gondelseitigen Teils der Rotornabe 13 anschließt (in FIG.2 - Bezugszeichen 109 für den vorderen spinnerseitigen Teil der Rotornabe). Der Nabenflansch 13F dient hier als vollumfänglicher Tragflansch für den Läuferträger 3A, wobei der Nabenflansch 13F hier vorzugsweise an die Rotornabe 13 innen-umfänglich angefügt ist und eine außenumfängliche Ringreihe von Schraubverbindungen 13.2 aufweist, an welche jeweils ein teilumfänglicher Läufer-Tragansatz 22 eines Läuferschenkels 3S der drei Läuferträgerelementen 3A.1, 3A.2, 3A.3 angeschlossen ist; nämlich zur Bildung eines vollumfänglichen Läufer-Tragansatzes 3TA.

FIG.8 zeigt in einem Ablaufschema die grundsätzlichen Verfahrensschritte zur bevorzugten Montage, nämlich insbesondere eine Baustellenmontage am Aufbauort einer Windenergieanlage, eines Generator-Tragsystems 5 mit einem Generatorträger 10 auf; dies ist im Einzelnen in FIG.9 bis FIG.13 erläutert auf die zudem Bezug genommen ist. Insofern dienen FIG.3 bis FIG.7 zur Erläuterung des grundsätzlichen Aufbaus und eines anderen Montageverfahrens.

Das bevorzugte Montageverfahren sieht in einem ersten Schritt S1 vor, dass der Statorträger als ein mehrelementiger Statorträger 2A mit einer Anzahl von Statorträger-Elementen 2A.1, 2A.2, 2A.3 wie im Detail anhand von FIG.9A und FIG.9B erläutert, zusammengesetzt wird.

Wie des Weiteren aus FIG. 9B ersichtlich ist, weist der Aufnahmeflansch 11F und die daran angesetzten Stator-Tragansätze 21, 2TA der Stator-Schenkel 2S eine entsprechende Schraubverbindung 11.2 auf. Analog gilt dies in entsprechender Weise für die Anbringung der Läuferschenkel 3S mit entsprechenden Läufer-Tragansätzen 22, 3TA an einem Nabenflansch 13F. Die Bezugszeichen sind der Einfachheit halber entsprechend zusammen in Fig.9B aufgeführt.

Ein genannter Flansch 11F, 13F weist als Tragflansch vorliegend ein zweites Passelement auf, das hier als Male-Teil (in dieser Ausführungsform als vollumfänglicher Steg) auf ein Female-Teil (in dieser Ausführungsform als Nut) abgestimmt ist am Tragansatz 2TA, 3TA der Schenkel 2S, 3S. Vorliegend ist der vollumfängliche Steg 11S, 13S am Tragflansch 11F, 13F zur selbstjustierenden Anbringung des Schenkels 2S, 3S und zur Einbringung in die jeweils innen-teilumfängliche Nut 2N, 3N seitlich angefasst. Vorliegend ist die Stirnfläche SF1, SF2 im Wesentlichen parallel verlaufend zur Anschlussebene des Tragansatzes 2TA, 3TA und des Tragflansches 11F, 13F gebildet, während die Seitenfläche A1, A2 von einem rechten Winkel abweichend zur Anschlussebene des Tragansatzes 2TA, 3TA und des Tragflansches 11F, 13F verläuft. Zwischen den Stirnflächen SF1 und SF2 verbleibt ein Freiraum F; dies und die Anfassung ist an den Seitenflächen A1, A2 entsprechend kenntlich gemacht.

Anschließend wird in einem Schritt S2 --wie grundsätzlich in FIG. 6 gezeigt ist-- der Achszapfen 12 an den Aufnahmezapfen 11, der auch den Aufnahmeflansch 11F für den Statorträger 2A hält, angefügt. Bei der hier bevorzugten Baustellenmontage ist jedoch (anders als in FIG. 6 zur Erläuterung gezeigt) zunächst vorgesehen, dass lediglich der Aufnahmezapfen 11 mit Aufnahmeflansch 11F und Statorträger 2A sowie Achszapfen 12 und Nabe 13 als ein teilweise assembliertes Bauteil des Generator-Tragsystems 5 zum Anbau eines Generatorträgers 10 gebildet wird, wie dies in FIG. 10 gezeigt ist. In dem hier gezeigten dritten Schritt S3 wird also der teilassemblierte Generatorträger 10 --d.h. zunächst nur der Startorträger 2A-- an dem Aufnahmezapfen 11 und Achszapfen 12 sowie Nabe 13 und über den am Aufnahmeflansch 11F angebrachten Statorträger im Schritt S3 zur Verfügung gestellt.

Des Weiteren wird in einem weiteren Schritt S4 der Läuferträger als mehrelementiger Läuferträger 3A mit einer Anzahl von Läuferträger-Elementen 3A.1, 3A.2, 3A.3 --wie dies anhand von FIG.11 ersichtlich ist-zusammengesetzt an dem in FIG.10 gezeigten teilassemblierten Generator-Tragsystem 5. Und zwar wird im Schritt S4 der Rotorträger 3A-wie in FIG. 11 gezeigt-- an dem Nabenflansch 13F angebracht indem die Rotorträger-Elemente 3A.1, 3A.2, 3A.3 radial eingeschoben werden in Bezug auf die Zentrierachse Z.

Ein Einfädeln des Rotors 3 entlang der in FIG. 11 eingezeichneten Zentrierachse Z ist damit überflüssig geworden - vielmehr können funktionsfähige Segmente des Rotors 3nämlich die den Läuferträger-Elementen 3A.1, 3A.2, 3A.3 entsprechenden Segmenteradial eingeschoben und am Nabenflansch 13F funktionsfähig festgemacht werden.

Wie in FIG.10 und FIG.11 ersichtlich, wird somit zunächst ein System aus einem mehrelementigen Statorträger 2A und einem mehrelementigen Läuferträger 3A gebildet zur Darstellung eines mehrelementigen Generatorträgers 10. Dieser Generatorträger 10 ist gemäß dem Schritt S4 so ausgestaltet, dass der Statorträger 2A und der Läuferträger 3A zusammengesetzt werden an dem gezeigten Generator-Tragsystem 5.

Das System eines Generatorträgers 10 ist also nur schrittweise und nicht als Ganzes, sondern eben unter nachträglicher radialer vereinzelter Einbringung der Läuferträger-Elemente 3A.1, 3A.2, 3A.3 im Schritt S4 in der aus FIG.11 ersichtlichen Weise an den Nabenflansch 13F an der Nabe 13 angesetzt. Zum dem Zeitpunkt ist bereits gemäß dem Schritt S3, wie in FIG.10 ersichtlich, die Rotornabe 13 bzw. 109 mit dem Achszapfen 12 an den Aufnahmezapfen 11 mit dem Aufnahmeflansch 11F und dem Statorträger 2A angesetzt.

Schließlich werden, wie in FIG.12 ersichtlich, in einem weiteren Schritt S5 die Rotorblätter 108 des Rotors an die Blattflanschlager 105 der Rotornabe 109 angesetzt, sodass im Ergebnis eine Konstruktion, wie sie assembliert in FIG.12 als Generator-Tragsystem 10 mit Rotor erkennbar ist, realisiert ist. Auf diese Weise kann bei der hier erläuterten Baustellenmontage am Boden ein Generatorträger 10 mit Rotornabe 109 und Rotorblättern 108 --d.h. praktisch das ganze Generator-Tragsystems 5 mit Rotor wie in FIG.12 ersichtlich-- zusammengesetzt werden.

Das ganze Generator-Tragsystems 5 mit Rotor kann dann in einem weiteren Schritt S6-wie in FIG.13 ersichtlich-- als Ganzes mit dem Aufnahmezapfen 11 am Maschinenträger 14 eines Kopfflansches 104 eines Turms 102 für eine Windenergieanlage angesetzt werden. Damit entsteht schließlich in FIG.13 das betriebsfertige Generatorsystem 5 auf Grundlage des Generator-Tragsystems 10 für eine Windenergieanlage der FIG.1 und FIG.2 in dem erläuterten Schritt S6.

## Patentansprüche

1. Trägerelement für einen Träger eines Ring-Generators (1), nämlich Statorträger-Element (2A.1, 2A.2, 2A.3) für einen Statorträger (2A) eines Ring-Generators (1) oder Läuferträger-Element (3A.1, 3A.2, 3A.3) für einen Läuferträger (3A) eines Ring-Generators (1), wobei zur Bildung des Trägers eine Anzahl von Trägerelementen über eine Generatorfläche zusammengesetzt werden und welcher Träger mit einem außen-umfänglichen Tragring (20, 30) zur Anbringung einer Wicklung und mit einem innenumfänglichen Tragansatz (21, 2TA, 22, 3TA) zur Vermittlung zu einem Zapfen (11) zur Verbindung mit einem Maschinenträger (14) ausgebildet ist, wobei das Trägerelement aufweist:
- einen einzigen und kreisausschnitt-förmigen Schenkel (2S, 3S), der einen Flächensektor der Generatorfläche beschreibt und zum Zusammensetzen des Tragrings (20, 30) ausgebildet ist, wobei
- der Schenkel (2S, 3S) mit dem innen-teilumfänglich verlaufenden Tragansatz (21, 2TA, 22, 3TA) zur Anbringung an einem vollumfänglichen Tragflansch (11F, 13F) versehen ist, wobei der vollumfängliche Tragflansch (11F, 13F) zur Vermittlung zu einem Zapfen (11) zur Verbindung mit einem Maschinenträger (14) vorgesehen ist,
**dadurch gekennzeichnet, dass**
- der Tragansatz (21, 2TA, 22, 3TA), ein erstes Passelement und der Tragflansch (11F, 13F) ein zweites Passelement aufweist, wobei das erste und zweite Passelement, passend aufeinander abgestimmt sind, und
- ein Stator-Tragarm (2S.1 ...2S.5) und/oder Stator-Schenkel (2S) in Form eines den Flächensektor überdeckenden Flachteils, als Speichen-Teil gebildet ist und/oder
- ein Läufer-Tragarm (3S.1 ... 3S.5) und/oder Läufer-Schenkel (3S) in Form eines den Flächensektor überdeckenden Flachteils, als Speichen-Teil gebildet ist, wobei
- das erste Passelement als eine innen-teilumfängliche Nut (2N, 3N) oder dergleichen Female-Teil am innen-teilumfänglichen Tragansatz (21, 2TA, 22, 3TA) ausgebildet ist und das zweite Passelement als ein vollumfänglicher Steg oder dergleichen Male-Teil am vollumfänglichen Tragflansch (11F, 13F) ausgebildet ist; oder (umgekehrt)
- das erste Passelement als ein innen-teilumfänglicher Steg (11S, 13S) oder dergleichen Male-Teil am innen-teilumfänglichen Tragansatz (21, 2TA, 22, 3TA) ausgebildet ist und das zweite Passelement als eine vollumfängliche Nut oder dergleichen Female-Teil am vollumfänglichen Tragflansch (11F, 13F) ausgebildet ist, wobei
das erste Passelement und/oder das zweite Passelement eine Stirnfläche und eine Seitenfläche aufweist, wobei die Stirnfläche zur Seitenfläche schräg verläuft, wobei
- die Stirnfläche parallel zur Anschluss-Ebene des Tragansatzes (21, 2TA, 22, 3TA) und des Tragflansches (11F, 13F) verläuft und die Seitenfläche von einem rechten Winkel abweichend zur Stirnfläche verläuft, und/oder
- die Seitenfläche rechtwinklig zur Anschluss-Ebene des Tragansatzes (21, 2TA, 22, 3TA) und des Tragflansches (11F, 13F) verläuft und die Stirnfläche von einem rechten Winkel abweichend zur Seitenfläche verläuft, und/oder
- die Seitenfläche von einem rechten Winkel abweichend zur Anschluss-Ebene des Tragansatzes (21, 2TA, 22, 3TA) und des Tragflansches (11F, 13F) verläuft und die Stirnfläche von einer Parallelität abweichend zur Anschluss-Ebene des Tragansatzes (21, 2TA, 22, 3TA) und des Tragflansches (11F, 13F) verläuft, wobei
- der Tragansatz (21, 2TA, 22, 3TA) und/oder der Tragflansch (11F, 13F) eine Lochung zur Durchführung einer Schraube, eines Bolzens oder dergleichen Haltelement aufweist, um den Tragansatz (21, 2TA, 22, 3TA) und den Tragflansch (11F, 13F) lösbar fest miteinander zu verbinden.

2. Trägerelement nach Anspruch 1, **dadurch gekennzeichnet, dass** die Lochung eine Lochreihe mit einer Mehrzahl von Löchern zur Durchführung einer Mehrzahl von Schrauben, Bolzen oder dergleichen Haltelemente aufweist, um den Tragansatz (21, 2TA, 22, 3TA) und den Tragflansch (11F, 13F) lösbar fest miteinander zu verbinden.

3. Statorträger-Element (2A.1, 2A.2, 2A.3) nach einem der Ansprüche 1 bis 2, **dadurch gekennzeichnet, dass**
- der Stator-Schenkel (2S) einen radial verlaufenden Stator-Tragarm (2S.1, 2S.2, 2S.3, 2S.4, 2S.5) und ein am Stator-Tragarm (2S.1, 2S.2, 2S.3, 2S.4, 2S.5) einstückig, anschließendes außen-umfänglich verlaufendes Stator-Tragring-Segment (20.1, 20.2, 20.3) zur Bildung des Stator-Tragrings (20) aufweist, und/oder
- unter verdrehter Anordnung unterschiedlicher Statorträger-Elemente (2A.1, 2A.2, 2A.3) und damit unter umfänglichem Versatz unterschiedlicher Stator-Tragring-Segmente (20.1, 20.2, 20.3) der Stator-Tragring (20) zu bilden ist.

4. Statorträger-Element (2A.1, 2A.2, 2A.3) nach Anspruch 3, **dadurch gekennzeichnet, dass** an den Stator-Tragarm (2S.1, 2S.2, 2S.3, 2S.4, 2S.5) ein Stator-Tragring-Segment (20.1, 20.2, 20.3) in Form einer Berandungszarge im Querschnitt T-förmig mittig anschließt.

5. Statorträger-Element (2A.1, 2A.2, 2A.3) nach Anspruch 3 oder 4, **dadurch gekennzeichnet, dass** der Stator-Tragarm (2S.1, 2S.2, 2S.3, 2S.4, 2S.5) an dem innen-teilumfänglichen Stator-Tragansatz (21) radial zu einer Zentrierachse einstückig anschließen.

6. Statorträger-Element (2A.1, 2A.2, 2A.3) nach Anspruch 5, **dadurch gekennzeichnet**, dassder innen-teilumfängliche Stator-Tragansatz (2TA) zur lösbar festen Verbindung mit dem Aufnahmeflansch (11F) und/oder der Aufnahmeflansch (11F) zur lösbar festen Verbindung mit dem Aufnahmezapfen (11) ausgebildet ist.

7. Läuferträger-Element (3A.1, 3A.2, 3A.3) nach einem der Ansprüche 1 bis 2, **dadurch gekennzeichnet, dass** der Läufer-Schenkel (3S) einen radial verlaufenden Läufer-Tragarm (3S.1, 3S.2, 3S.3, 3S.4, 3S.5) und ein am Läufer-Tragarm (3S.1, 3S.2, 3S.3, 3S.4, 3S.5) einstückig anschließendes außen-umfänglich verlaufendes LäufertragringSegment (23.1, 23.2, 23.3) zur Bildung des Läufer-Tragrings (23) aufweist, und/oder
- unter verdrehter Anordnung unterschiedlicher Läuferträger-Elemente und damit unter umfänglichem Versatz unterschiedlicher Läufer-Tragring-Segmente (23.1, 23.2, 23.3) der Läufer-Tragring (23, 30) zu bilden ist.

8. Läuferträger-Element (3A.1, 3A.2, 3A.3) nach Anspruch 7, **dadurch gekennzeichnet, dass** an den Läufer-Tragarm (3S.1, 3S.2, 3S.3, 3S.4, 3S.5) ein Läufer-Tragring-Segment (23.1, 23.2, 23.3) in Form einer Berandungszarge im Querschnitt L-förmig anschließt, insbesondere seitlich anschließt.

9. Läuferträger-Element (3A.1, 3A.2, 3A.3) nach Anspruch 7 oder 8, **dadurch gekennzeichnet, dass**
- der Läufer-Tragarm (3S.1, 3S.2, 3S.3, 3S.4, 3S.5) an dem innen-teilumfänglichen Läufer-Tragansatz (22) radial zu einer Zentrierachse einstückig anschließen.

10. Läuferträger-Element (3A.1, 3A.2, 3A.3) nach Anspruch 9, **dadurch gekennzeichnet, dass** der innen-teilumfängliche Läufer-Tragansatz (22) zur lösbar festen Verbindung mit dem Nabenflansch (13F) und/oder der Nabenflansch (13F) zur lösbar festen Verbindung mit der Nabe (13) ausgebildet ist.

11. System eines mehrelementigen Trägers mit einer Anzahl von Trägerelementen nach wenigstens einem der Ansprüche 1 bis 2, insbesondere mehrelementiger Statorträger (2A) mit einer Anzahl von Statorträger-Elementen (2A.1, 2A.2, 2A.3) nach wenigstens einem der Ansprüche 3 bis 6 und/oder mehrelementiger Läuferträger (3A) mit einer Anzahl von Läuferträger-Elementen (3A.1, 3A.2, 3A.3) nach wenigstens einem der Ansprüche 7 bis 10 mit dem Statorträger (2A) mit der Anzahl von Stator-Trägerelementen (2A.1, 2A.2, 2A.3) und/oder mit dem Läuferträger (3A) mit der Anzahl von LäuferTrägerelementen (3A.1, 3A.2, 3A.3), wobei jedes der Trägerelemente, von einem anderen Trägerelement abnehmbar und wieder ansetzbar ist mit einer eigenen elektrischen Generator-Funktion derart, dass das Trägerelement getrennt transportierbar ist.

12. Generatorträger (10) umfassend ein System des Anspruchs 11, mit einem Statorträger (2A) und mit einem Läuferträger (3A), wobei der Läuferträger (3A) den StatorTräger (2A) umfänglich umgibt.

13. Generator (1) in Form eines Synchrongenerators mit einem Außenläufer, mit einem Generatorträger (10) nach Anspruch 12, wobei der Statorträger (2A) eine Stator-Wicklung trägt mit einer Mehrzahl von Stator-Polpaketen, und der Läuferträger (3A) eine Läuferwicklung trägt mit einer Mehrzahl von Läufer-Polpaketen, wobei jedes der Stator-Trägerelemente (2A.1, 2A.2, 2A.3) und Läufer-Trägerelemente (3A.1, 3A.2, 3A.3) mit einem eigenen elektrischen Anschluss ausgebildet ist, eine eigene funktionsfähige Generatorfunktion auszuführen.

14. Generator-Tragsystem (5) mit einem Generator nach Anspruch 13, aufweisend:
- einen Aufnahmezapfen (11) zum Tragen des Stators (2), optional zur Anbringung an oder weiter auch aufweisend einen Maschinenträger (14), wobei der Statorträger (2A) mit dem innen-teilumfängliche Stator-Tragansatz (21) zur lösbar festen Verbindung mit dem Aufnahmeflansch (11F) am Aufnahmezapfen (11) angebracht ist, und/oder
- einen Achszapfen (12) zur Anbringung einer Rotornabe, wobei der Läuferträger (3A) mit dem innen-teilumfänglich verlaufenden Läufer-Tragansatz (22) zur Anbringung an dem Nabenflansch (13F) an der Rotornabe (109) vorgesehen ist,
- optional auch der Rotor mit Rotornabe (109) und Rotorblättern, wobei die Rotornabe (109) auf einem Achszapfen (12) zur Verbindung mit einem Aufnahmezapfen (11) und dieser optional mit einem Maschinenträger (14) vorgesehen ist.

15. Gondel (101) einer Windenergieanlage (100) mit einer hinteren Gondelverkleidung (107) und mit einem Generator-Tragsystem (5) nach Anspruch 14 sowie mit einem Rotor umfassend die Rotornabe (109) unter Fortsetzung der hinteren Gondelverkleidung (107).

16. Windenergieanlage (100) aufweisend:
- einen Turm (102) mit einem Kopfflansch (104), und
- eine Gondel (101) mit einem Generator-Tragsystem (5) nach Anspruch 14 wobei der Maschinenträger (14) am Kopfflansch (104) angeschlossen ist und wobei die Gondel (101) eine hintere Gondelverkleidung (107) aufweist, sowie
- mit einem Rotor umfassend eine Rotornabe (109) unter Fortsetzung der hinteren Gondelverkleidung (107).

17. Verfahren zur Montage eines Generator-Tragsystem nach Anspruch 14, bei dem
- der Statorträger (2A) mit dem Stator-Tragansatz (21) und dem Aufnahmeflansch (11F) am Aufnahmezapfen (11) angebracht wird,
- die Rotornabe (109) auf dem Achszapfen (12) vormontiert wird zur Bildung einer Nabenlagerung, insbesondere ab Werk, und der Achszapfen (12) die Rotornabe (109) lagernd aufnimmt
- der Läuferträger (3A), mit dem Läufer-Tragansatz (22) und dem Nabenflansch (13F) an der Rotornabe (109) angebracht wird und
- die Nabenlagerung mit dem Achszapfen (12) an den Aufnahmezapfen (11) des Maschinenträgers (14) gesetzt wird, und
- die Anzahl von Rotorblättern (108) zur Bildung des Rotors an die Anzahl von Blattflanschlagern (105) der Rotornabe (109) angesetzt werden, und
- die so zusammengesetzten Teile am Maschinenträger (14) bei einem errichteten Turm (102) mit einem Kopfflansch (104) angebracht werden.

## Claims

1. Carrier element for a carrier of a ring generator (1),
that is to say, stator carrier element (2A.1, 2A.2, 2A.3) for a stator carrier (2A) of a ring generator (1) or rotor carrier element (3A.1, 3A.2, 3A.3) for a rotor carrier (3A) of a ring generator (1), wherein in order to form the carrier a number of carrier elements are combined over a generator surface, and which carrier is constructed with an outer circumferential carrier ring (20, 30) for fitting a winding and with an inner circumferential carrier attachment (21, 2TA, 22, 3TA) for transmitting to a journal (11) for connection to a machine carrier (14), wherein the carrier element has:
- a single and circle-sector-shaped member (2S, 3S) which describes a surface sector of the generator face and which is constructed to assemble the carrier ring (20, 30), wherein
- the member (2S, 3S) is provided with the carrier attachment (21, 2TA, 22, 3TA) which extends over an inner part-circumference for fitting to a carrier flange (11F, 13F) which extends over the entire circumference, wherein the carrier flange (11F, 13F) which extends over the entire circumference is provided for transmitting to a journal (11) for connection to a machine carrier (14),
**characterised in that**
- the carrier attachment (21, 2TA, 22, 3TA) has a first fitting element and the carrier flange (11F, 13F) has a second fitting element, wherein the first and the second fitting elements are adapted to fit each other, and
- a stator carrier arm (2S.1..2S.5) and/or stator member (2S) in the form of a flat portion which covers the surface sector is formed as a spoke portion, and/or
- a rotor carrier arm (3S.1.. 3S.5) and/or rotor member (3S) in the form of a flat portion which covers the surface sector is formed as a spoke portion, wherein
- the first fitting element is constructed as a groove (2N, 3N) which extends over an inner part-circumference or similar female portion on the inner carrier attachment (21, 2TA, 22, 3TA) which extends over the inner part-circumference, and the second fitting element is constructed as a web which extends over the entire circumference or similar male portion on the carrier flange (11F, 13F) which extends over the entire circumference; or (vice versa)
- the first fitting element is constructed as a web (11S, 13S) which extends over the inner part-circumference or similar male portion on the carrier attachment (21, 2TA, 22, 3TA) which extends over the inner part-circumference, and the second fitting element is constructed as a groove which extends over the entire circumference or similar female portion on the carrier flange (11F, 13F) which extends over the entire circumference, wherein
the first fitting element and/or the second fitting element has/have an end face and a side face, wherein the end face extends obliquely with respect to the side face, wherein
- the end face extends parallel with the connection plane of the carrier attachment (21, 2TA, 22, 3TA) and the carrier flange (11F, 13F) and the side face extends so as to diverge from a right angle with respect to the end face, and/or
- the side face extends at right-angles with respect to the connection plane of the carrier attachment (21, 2TA, 22, 3TA) and the carrier flange (11F, 13F) and the end face extends so as to diverge from a right angle with respect to the side face, and/or
- the side face extends so as to diverge from a right angle with respect to the connection plane of the carrier attachment (21, 2TA, 22, 3TA) and the carrier flange (11F, 13F) and the end face extends so as to diverge from parallelism with respect to the connection plane of the carrier attachment (21, 2TA, 22, 3TA) and the carrier flange (11F, 13F), wherein
- the carrier attachment (21, 2TA, 22, 3TA) and/or the carrier flange (11F, 13F) has/have a perforation for the passage of a screw, a bolt or similar retention element in order to releasably connect the carrier attachment (21, 2TA, 22, 3TA) and the carrier flange (11F, 13F) securely to each other.

2. Carrier element according to claim 1, **characterised in that** the perforation has a series of holes with a plurality of holes for the passage of a plurality of screws, bolts or similar retention elements in order to releasably connect the carrier attachment (21, 2TA, 22, 3TA) and the carrier flange (11F, 13F) securely to each other.

3. Stator carrier element (2A.1, 2A.2, 2A.3) according to either claim 1 or claim 2, **characterised in that**
- the stator member (2S) has a radially extending stator carrier arm (2S.1, 2S.2, 2S.3, 2S.4, 2S.5) and a stator carrier ring segment (20.1, 20.2, 20.3) which integrally adjoins the stator carrier arm (2S.1, 2S.2, 2S.3, 2S.4, 2S.5) and which extends on the outer circumference in order to form the stator carrier ring (20), and/or
- the stator carrier ring (20) is intended to be formed with a distorted arrangement of different stator carrier elements (2A.1, 2A.2, 2A.3) and consequently with a circumferential offset of different stator carrier ring segments (20.1, 20.2, 20.3) .

4. Stator carrier element (2A.1, 2A.2, 2A.3) according to claim 3, **characterised in that** the stator carrier arm (2S.1, 2S.2, 2S.3, 2S.4, 2S.5) is adjoined centrally in a T-shaped cross-sectional manner by a stator carrier ring segment (20.1, 20.2, 20.3) in the form of a boundary frame.

5. Stator carrier element (2A.1, 2A.2, 2A.3) according to claim 3 or claim 4, **characterised in that** the stator carrier arm (2S.1, 2S.2, 2S.3, 2S.4, 2S.5) integrally adjoins the inner part-circumferential stator carrier attachment (21) radially relative to a centering axis.

6. Stator carrier element (2A.1, 2A.2, 2A.3) according to claim 5, **characterised in that** the stator carrier attachment (2TA) which extends over an inner part-circumference is constructed for releasably secure connection to the receiving flange (11F) and/or the receiving flange (11F) is constructed for releasably secure connection to the receiving journal (11) .

7. Rotor carrier element (3A.1, 3A.2, 3A.3) according to either claim 1 or claim 2, **characterised in that** the rotor member (3S) has a radially extending rotor carrier arm (3S.1, 3S.2, 3S.3, 3S.4, 3S.5) and a rotor carrier ring segment (23.1, 23.2, 23.3) which integrally adjoins the rotor carrier arm (3S.1, 3S.2, 3S.3, 3S.4, 3S.5) and which extends on the outer circumference in order to form the rotor carrier ring (23), and/or
- the rotor carrier ring (23, 30) is intended to be formed with a distorted arrangement of different rotor carrier elements and consequently with a circumferential offset of different rotor carrier ring segments (23.1, 23.2, 23.3).

8. Rotor carrier element (3A.1, 3A.2, 3A.3) according to claim 7 **characterised in that** the rotor carrier arm (3S.1, 3S.2, 3S.3, 3S.4, 3S.5) is adjoined in an L-shaped cross-sectional manner, in particular laterally adjoined, by a rotor carrier ring segment (23.1, 23.2, 23.3) in the form of a boundary frame.

9. Rotor carrier element (3A.1, 3A.2, 3A.3) according to claim 7 or claim 8, **characterised in that**
- the rotor carrier arm (3S.1, 3S.2, 3S.3, 3S.4, 3S.5) integrally adjoins the inner part-circumferential rotor carrier attachment (22) radially with respect to a centring axis.

10. Rotor carrier element (3A.1, 3A.2, 3A.3) according to claim 9, **characterised in that** the rotor carrier attachment (22) which extends over an inner part-circumference is constructed for releasable secure connection to the hub flange (13F) and/or the hub flange (13F) is constructed for releasable secure connection to the hub (13).

11. System of a multi-element carrier having a number of carrier elements according to at least one of claims 1 to 2, in particular multi-element stator carrier (2A) having a number of stator carrier elements (2A.1, 2A.2, 2A.3) according to at least one of claims 3 to 6 and/or multi-element rotor carrier (3A) having a number of rotor carrier elements (3A.1, 3A.2, 3A.3) according to at least one of claims 7 to 10, with the stator carrier (2A) having the number of stator carrier elements (2A.1, 2A.2, 2A.3) and/or having the rotor carrier (3A) having the number of rotor carrier elements (3A.1, 3A.2, 3A.3), wherein each of the carrier elements can be removed from another carrier element and be positioned again, with an individual electrical generator function so that the carrier element can be transported separately.

12. Generator carrier (10) comprising a system of claim 11, having a stator carrier (2A) and having a rotor carrier (3A), wherein the rotor carrier (3A) circumferentially surrounds the stator carrier (2A).

13. Generator (1) in the form of a synchronous generator having an external rotor, having a generator carrier (10) according to claim 12, wherein the stator carrier (2A) carries a stator winding having a plurality of stator pole assemblies, and the rotor carrier (3A) carries a rotor winding having a plurality of rotor pole assemblies, wherein each of the stator carrier elements (2A.1, 2A.2, 2A.3) and rotor carrier elements (3A.1, 3A.2, 3A.3) is constructed with an individual electrical connection in order to carry out an individual operational generator function.

14. Generator carrier system (5) having a generator according to claim 13, having:
- a receiving journal (11) for carrying the stator (2), optionally for fitting to or further also having a machine carrier (14), wherein the stator carrier (2A) with the stator carrier attachment (21) which extends over an inner part-circumference for releasably secure connection to the receiving flange (11F) is fitted to the receiving journal (11), and/or
- an axle journal (12) for fitting a rotor hub, wherein the rotor carrier (3A) with the rotor carrier attachment (22) which extends over an inner part-circumference for fitting to the hub flange (13F) is provided on the rotor hub (109),
- optionally also the rotor having a rotor hub (109) and rotor blades, wherein the rotor hub (109) is provided on an axle journal (12) for connection to a receiving journal (11) and this journal is optionally provided with a machine carrier (14).

15. Pod (101) of a wind turbine (100) having a rear pod casing (107) and having a generator carrier system (5) according to claim 14 and having a rotor comprising the rotor hub (109) with a continuation of the rear pod casing (107).

16. Wind turbine (100) having:
- a tower (102) having an upper flange (104), and
- a pod (101) having a generator carrier system (5) according to claim 14, wherein the machine carrier (14) is connected to the upper flange (104) and wherein the pod (101) has a rear pod casing (107), and
- having a rotor comprising a rotor hub (109) with a continuation of the rear pod casing (107).

17. Method for mounting a generator carrier system according to claim 14, wherein
- the stator carrier (2A) with the stator carrier attachment (21) and the receiving flange (11F) is fitted to the receiving journal (11),
- the rotor hub (109) is pre-assembled on the axle journal (12) in order to form a hub bearing, in particular ex works, and the axle journal (12) receives the rotor hub (109) in a bearing manner,
- the rotor carrier (3A) with the rotor carrier attachment (22) and the hub flange (13F) is fitted to the rotor hub (109), and
- the hub bearing with the axle journal (12) is placed on the receiving journal (11) of the machine carrier (14), and
- the number of rotor blades (108) in order to form the rotor are placed on the number of blade flange bearings (105) of the rotor hub (109), and
- the components which have been assembled in this manner are fitted to the machine carrier (14) in the case of an erected tower (102) with an upper flange (104).

## Revendications

1. Élément de support pour un support d'un générateur (1) annulaire, à savoir élément de support de stator (2A.1, 2A.2, 2A.3) pour un support de stator (2A) d'un générateur (1) annulaire ou élément de support de rotor (3A.1, 3A.2, 3A.3) pour un support de rotor (3A) d'un générateur (1) annulaire, dans lequel un certain nombre d'éléments de support est assemblé par le biais d'une surface de générateur pour la formation du support et lequel support est réalisé avec une bague de support (20, 30) périphérique extérieure pour le montage d'un enroulement et avec une pièce rapportée de support (21, 2TA, 22, 3TA) périphérique intérieure pour l'entremise à un tourillon (11) pour la liaison à un support de machine (14), dans lequel l'élément de support présente :
- une branche (2S, 3S) unique et en forme de secteur circulaire, qui décrit un secteur de surface de la surface de générateur et est réalisée pour l'assemblage de la bague de support (20, 30), dans lequel
- la branche (2S, 3S) est dotée de la pièce rapportée de support (21, 2TA, 22, 3TA) s'étendant sur une partie de la périphérie intérieure pour le montage au niveau d'une bride de support (11F, 13F) entièrement périphérique, dans lequel la bride de support (11F, 13F) entièrement périphérique est prévue pour l'entremise à un tourillon (11) pour la liaison à un support de machine (14),
**caractérisé en ce que**
- la pièce rapportée de support (21, 2TA, 22, 3TA) présente un premier élément d'ajustement et la bride de support (11F, 13F) présente un deuxième élément d'ajustement, dans lequel le premier et deuxième élément d'ajustement sont adaptés l'un à l'autre de manière convenable, et
- un bras de support de stator (2S.1 ... 2S.5) et/ou une branche de stator (2S) sous la forme d'une partie plate recouvrant le secteur de surface, est formé en tant que partie de rayon et/ou
- un bras de support de rotor (3S.1 ... 3S.5) et/ou une branche de rotor (3S) sous la forme d'une partie plate recouvrant le secteur de surface, est formé en tant que partie de rayon, dans lequel
- le premier élément d'ajustement est réalisé en tant que rainure (2N, 3N) partiellement périphérique intérieure ou partie femelle similaire au niveau de la pièce rapportée de support (21, 2TA, 22, 3TA) partiellement périphérique intérieure et le deuxième élément d'ajustement est réalisé en tant que nervure entièrement périphérique ou partie mâle similaire au niveau de la bride de support entièrement périphérique (11F, 13F) ; ou (inversement)
- le premier élément d'ajustement est réalisé en tant que nervure (11S, 13S) partiellement périphérique intérieure ou partie mâle similaire au niveau de la pièce rapportée de support (21, 2TA, 22, 3TA) partiellement périphérique intérieure et le deuxième élément d'ajustement est réalisé en tant que rainure entièrement périphérique ou partie femelle similaire au niveau de la bride de support (11F, 13F) entièrement périphérique, dans lequel
le premier élément d'ajustement et/ou le deuxième élément d'ajustement présente une surface frontale et une surface latérale, dans lequel la surface frontale s'étend en biais par rapport à la surface latérale, dans lequel
- la surface frontale s'étend parallèlement au plan de connexion de la pièce rapportée de support (21, 2TA, 22, 3TA) et de la bride de support (11F, 13F) et la surface latérale s'étend de manière divergente d'un angle droit vers la surface frontale, et/ou
- la surface latérale s'étend en angle droit par rapport au plan de connexion de la pièce rapportée de support (21, 2TA, 22, 3TA) et de la bride de support (11F, 13F) et la surface frontale s'étend de manière divergente d'un angle droit vers la surface latérale, et/ou
- la surface latérale s'étend de manière divergente d'un angle droit vers le plan de connexion de la pièce rapportée de support (21, 2TA, 22, 3TA) et de la bride de support (11F, 13F) et la surface frontale s'étend de manière divergente d'un parallélisme vers le plan de connexion de la pièce rapportée de support (21, 2TA, 22, 3TA) et de la bride de support (11F, 13F), dans lequel
- la pièce rapportée de support (21, 2TA, 22, 3TA) et/ou la bride de support (11F, 13F) présente une perforation pour le passage d'une vis, d'un boulon ou élément de retenue similaire, afin de relier solidement l'un à l'autre de manière amovible la pièce rapportée de support (21, 2TA, 22, 3TA) et la bride de support (11F, 13F) .

2. Élément de support selon la revendication 1, **caractérisé en ce que** la perforation présente une série de trous avec une pluralité de trous pour le passage d'une pluralité de vis, boulons ou éléments de retenue similaires afin de relier solidement l'un à l'autre de manière amovible la pièce rapportée de support (21, 2TA, 22, 3TA) et la bride de support (11F, 13F).

3. Élément de support de stator (2A.1, 2A.2, 2A.3) selon l'une quelconque des revendications 1 et 2, **caractérisé en ce que**
- la branche de stator (2S) présente un bras de support de stator (2S.1, 2S.2, 2S.3, 2S.4, 2S.5) s'étendant radialement et un segment de bague de support de stator (20.1, 20.2, 20.3) s'étendant sur la périphérie extérieure, se raccordant d'un seul tenant au bras de support de stator (2S.1, 2S.2, 2S.3, 2S.4, 2S.5) pour la formation de la bague de support (20) de stator, et/ou
- la bague de support (20) de stator doit être formée dans un agencement déformé de différents éléments de support de stator (2A.1, 2A.2, 2A.3) et ainsi dans un décalage périphérique de différents segments de bague de support de stator (20.1, 20.2, 20.3).

4. Élément de support de stator (2A.1, 2A.2, 2A.3) selon la revendication 3, **caractérisé en ce qu'**un segment de bague de support de stator (20.1, 20.2, 20.3) se raccorde sous la forme d'un cadre de bord à coupe transversale en forme de T au milieu au bras de support de stator (2S.1, 2S.2, 2S.3, 2S.4, 2S.5).

5. Élément de support de stator (2A.1, 2A.2, 2A.3) selon la revendication 3 ou 4, **caractérisé en ce que** le bras de support de stator (2S.1, 2S.2, 2S.3, 2S.4, 2S.5) se raccorde d'un seul tenant à la pièce rapportée de support (21) de stator partiellement périphérique intérieure radialement à un axe de centrage.

6. Élément de support de stator (2A.1, 2A.2, 2A.3) selon la revendication 5, **caractérisé en ce que** la pièce rapportée de support (2TA) de stator partiellement périphérique intérieure est réalisée pour la liaison solide amovible à la bride de réception (11F) et/ou la bride de réception (11F) est réalisée pour la liaison solide amovible au tourillon (11) de réception.

7. Élément de support de rotor (3A.1, 3A.2, 3A.3) selon l'une quelconque des revendications 1 et 2, **caractérisé en ce que** la branche de rotor (3S) présente un bras de support de rotor (3S.1, 3S.2, 3S.3, 3S.4, 3S.5) s'étendant radialement et un segment de bague de support de rotor (23.1, 23.2, 23.3) s'étendant sur la périphérie extérieure, se raccordant d'un seul tenant au bras de support de rotor (3S.1, 3S.2, 3S.3, 3S.4, 3S.5) pour la formation de la bague de support (23) de rotor, et/ou
- la bague de support (23, 30) de rotor doit être formée dans un agencement déformé de différents éléments de support de rotor et ainsi dans un décalage périphérique de différents segments de bague de support de rotor (23.1, 23.2, 23.3).

8. Élément de support de rotor (3A.1, 3A.2, 3A.3) selon la revendication 7, **caractérisé en ce qu'**un segment de bague de support de rotor (23.1, 23.2, 23.3) se raccorde, en particulier se raccorde latéralement, sous la forme d'un cadre de bord à coupe transversale en forme de L au bras de support de rotor (3S.1, 3S.2, 3S.3, 3S.4, 3S.5).

9. Élément de support de rotor (3A.1, 3A.2, 3A.3) selon la revendication 7 ou 8, **caractérisé en ce que**
- le bras de support de rotor (3S.1, 3S.2, 3S.3, 3S.4, 3S.5) se raccorde d'un seul tenant à la pièce rapportée de support (22) de rotor partiellement périphérique intérieure radialement à un axe de centrage.

10. Élément de support de rotor (3A.1, 3A.2, 3A.3) selon la revendication 9, **caractérisé en ce que** la pièce rapportée de support (22) de rotor partiellement périphérique intérieure est réalisée pour la liaison solide amovible à la bride de moyeu (13F) et/ou la bride de moyeu (13F) est réalisée pour la liaison solide amovible au moyeu (13).

11. Système d'un support à plusieurs éléments avec un certain nombre d'éléments de support selon au moins l'une quelconque des revendications 1 et 2, en particulier support de stator (2A) à plusieurs éléments avec un certain nombre d'éléments de support de stator (2A.1, 2A.2, 2A.3) selon au moins l'une quelconque des revendications 3 à 6 et/ou support de rotor à plusieurs éléments (3A) avec un certain nombre d'éléments de support de rotor (3A.1, 3A.2, 3A.3) selon au moins l'une quelconque des revendications 7 à 10 avec le support de stator (2A) avec le nombre d'éléments de support de stator (2A.1, 2A.2, 2A.3) et/ou avec le support de rotor (3A) avec le nombre d'éléments de support de rotor (3A.1, 3A.2, 3A.3), dans lequel chacun des éléments de support peut être enlevé d'un autre élément de support et peut être remis en place avec une fonction de générateur électrique propre de sorte que l'élément de support peut être transporté de manière séparée.

12. Support de générateur (10) comprenant un système de la revendication 11, avec un support de stator (2A) et avec un support de rotor (3A), dans lequel le support de rotor (3A) entoure périphériquement le support de stator (2A).

13. Générateur (1) sous la forme d'un générateur synchrone avec un rotor extérieur, avec un support de générateur (10) selon la revendication 12, dans lequel le support de stator (2A) porte un enroulement de stator avec une pluralité de paquets de pôles de stator, et le support de rotor (3A) porte un enroulement de rotor avec une pluralité de paquets de pôles de rotor, dans lequel chacun des éléments de support de stator (2A.1, 2A.2, 2A.3) et des éléments de support de rotor (3A.1, 3A.2, 3A.3) est réalisé avec un raccordement électrique propre pour effectuer une fonction de générateur fonctionnelle propre.

14. Système de support de générateur (5) avec un générateur selon la revendication 13, présentant :
- un tourillon (11) de réception pour le support du stator (2), en option pour le montage à ou en outre aussi présentant un support de machine (14), dans lequel le support de stator (2A) est monté avec la pièce rapportée de support (21) de stator partiellement périphérique intérieure pour la liaison solide amovible à la bride de réception (11F) au niveau du tourillon (11) de réception, et/ou
- un tourillon d'axe (12) pour le montage d'un moyeu de rotor, dans lequel le support de rotor (3A) est prévu avec la pièce rapportée de support (22) de rotor s'étendant sur une partie de la périphérie intérieure pour le montage à la bride de moyeu (13F) au niveau du moyeu de rotor (109),
- en option aussi le rotor avec moyeu de rotor (109) et pales de rotor, dans lequel le moyeu de rotor (109) est prévu sur un tourillon d'axe (12) pour la liaison à un tourillon (11) de réception et celui-ci en option avec un support de machine (14).

15. Nacelle (101) d'une éolienne (100) avec un habillage de nacelle arrière (107) et avec un système de support de générateur (5) selon la revendication 14 ainsi qu'avec un rotor comprenant le moyeu de rotor (109) dans la continuation de l'habillage de nacelle arrière (107).

16. Éolienne (100) présentant :
- une tour (102) avec une bride de tête (104), et
- une nacelle (101) avec un système de support de générateur (5) selon la revendication 14 dans lequel le support de machine (14) est raccordé à la bride de tête (104) et dans lequel la nacelle (101) présente un habillage de nacelle arrière (107) ainsi que
- avec un rotor comprenant un moyeu de rotor (109) dans la continuation de l'habillage de nacelle arrière (107).

17. Procédé de montage d'un système de support de générateur selon la revendication 14, dans lequel
- le support de stator (2A) est monté avec la pièce rapportée de support (21) de stator et la bride de réception (11F) au niveau du tourillon (11) de réception,
- le moyeu de rotor (109) est prémonté sur le tourillon d'axe (12) pour la formation d'un palier de moyeu, en particulier départ usine, et le tourillon d'axe (12) reçoit en palier le moyeu de rotor (109)
- le support de rotor (3A), avec la pièce de support de rotor (22) et la bride de moyeu (13F) est monté au niveau du moyeu de rotor (109) et
- le palier de moyeu avec le tourillon d'axe (12) est placé au niveau du tourillon (11) de réception du support de machine (14), et
- le nombre de pales de rotor (108) pour la formation du rotor est rapporté au nombre de paliers de bride de pale (105) du moyeu de rotor (109), et
- les pièces ainsi assemblées sont montées au niveau du support de machine (14) sur une tour (102) édifiée avec une bride de tête (104).
